(19) **Europäisches Patentamt**
**European Patent Office**
**Office européen des brevets**

(11) **EP 3 072 935 B1**

(12) **EUROPEAN PATENT SPECIFICATION**

(45) Date of publication and mention
of the grant of the patent:
**21.10.2020 Bulletin 2020/43**

(21) Application number: **14864550.0**

(22) Date of filing: **20.11.2014**

(51) Int Cl.:
***C09D 11/322*** (2014.01)   ***B41J 2/01*** (2006.01)
***B41M 5/00*** (2006.01)   ***C09D 17/00*** (2006.01)
***C09D 11/106*** (2014.01)   ***C09D 11/326*** (2014.01)
***C09D 11/107*** (2014.01)

(86) International application number:
**PCT/JP2014/080801**

(87) International publication number:
**WO 2015/076342 (28.05.2015 Gazette 2015/21)**

(54) **PIGMENT AQUEOUS DISPERSION FOR INKJET RECORDING**

WÄSSRIGE PIGMENTDISPERSION ZUR TINTENSTRAHLAUFZEICHNUNG

DISPERSION PIGMENTAIRE AQUEUSE POUR ENREGISTREMENT AU JET D'ENCRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.11.2013 JP 2013242089**
**22.11.2013 JP 2013242085**

(43) Date of publication of application:
**28.09.2016 Bulletin 2016/39**

(73) Proprietor: **Kao Corporation
Chuo-ku
Tokyo 103-8210 (JP)**

(72) Inventors:
• **FUKUDA, Teruyuki
Wakayama-shi
Wakayama 640-8580 (JP)**
• **TANAKA, Satoshi
Wakayama-shi
Wakayama 640-8580 (JP)**

• **ASHIZAWA, Takeshi
Wakayama-shi
Wakayama 640-8580 (JP)**
• **HAMADA, Daisuke
Wakayama-shi
Wakayama 640-8580 (JP)**

(74) Representative: **Hoffmann Eitle
Patent- und Rechtsanwälte PartmbB
Arabellastraße 30
81925 München (DE)**

(56) References cited:
EP-A1- 1 832 634   WO-A1-2006/054787
WO-A2-2008/075750   JP-A- H10 287 836
JP-A- 2007 177 108   JP-A- 2007 262 205
JP-A- 2007 297 486   JP-A- 2008 163 131
JP-A- 2009 084 501   JP-A- 2009 227 945
JP-A- 2010 126 600   JP-A- 2010 222 424
JP-A- 2011 052 070   JP-A- 2011 127 066
JP-A- 2012 140 611

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present invention relates to a water-based pigment dispersion for ink-jet printing, and a process for producing the water-based dispersion.

BACKGROUND OF THE INVENTION

In ink-jet printing methods, droplets of ink are directly projected onto a recording member from very fine nozzles and allowed to adhere to the recording member to form characters or images thereon. The ink-jet printing methods have become rapidly spread because of various advantages such as easiness of full coloration, low cost, capability of using a plain paper as the recording member, non-contact with printed characters or images, etc.

In recent years, in order to impart good weathering resistance and water resistance to printed matters, an ink for ink-jet printing which contains a pigment as a colorant has been extensively used in the ink-jet printing methods.

For example, JP 2006-8786A discloses a water-based ink containing a dispersible colorant constituted of a water-insoluble colorant and chargeable resin pseudo-fine particles that are adhered onto the water-insoluble colorant and have a smaller particle size than that of the water-insoluble colorant, and at least one water-soluble colorant, in which an average value of zeta potentials on a surface of the dispersible colorant as well as a distribution of the zeta potentials are controlled to respective specific ranges to considerably improve color developability (image density) of the ink, and the resulting ink can exhibit good quick-drying properties and form printed images whose printed portions have a high uniformity.

JP 2005-15550A discloses a process for producing a pigment dispersion that is free from not only increase in size of pigment particles even when subjected to heat history but also clogging of nozzles with a recording solution and defects upon ejection thereof, etc., and has a high dispersion stability, which includes the steps of dissolving a water-insoluble polymer in a solvent, dispersing a pigment in the resulting solution using media, heating the obtained dispersion at a temperature of from 100 to 150°C for about 4 h, and finally removing the solvent from the dispersion.

JP 2007-99915A discloses a process for producing an ink having an excellent ejection stability, which includes the steps of dissolving a water-insoluble polymer in a solvent, dispersing a pigment in the resulting solution under a high pressure, adding water to the resulting dispersion, stirring the dispersion, and then removing the solvent from the dispersion.

On the other hand, a pigment ink prepared by dispersing a pigment by a mechanical force in the presence of a polymer dispersant has posed such a problem that pigment particles are deteriorated in long-term storage stability owing to poor adsorptivity of the polymer to the pigment. To solve this problem, there has been proposed a pigment ink using a water-insoluble polymer as the dispersant in order to eliminate defects inherent to the pigment ink, such as poor long-term storage stability.

For example, JP 2001-26733A discloses a process for producing an ink for ink-jet printing, in which upon dispersing a pigment using hardened polymer beads, a weak shear force is first applied to the pigment, and then a strong shear force is applied thereto.

JP 2008-163131A discloses a process for producing a water-based ink, which includes the steps of dissolving a water-insoluble polymer in a solvent, dispersing pigment particles in the resulting solution by applying a mechanical force thereto, heating the obtained dispersion at a temperature of from 50 to 90°C for about 2 h, and finally removing the solvent from the dispersion, in which the polymer is present in a stabilized state on a surface of the pigment, so that the resulting ink has a reduced viscosity.

JP 2009-155568A discloses a process for producing a water-based dispersion for ink-jet printing having an improved ejection property, which includes the steps of dissolving a water-insoluble polymer in a solvent, dispersing pigment particles in the resulting solution, removing the solvent from the obtained dispersion, and finally heating the dispersion at a temperature of 40°C or higher.

SUMMARY OF THE INVENTION

The present invention relates to the following aspects [1] and [2].

[1] A water-based pigment dispersion for ink-jet printing including pigment particles and water, in which a scattering intensity area ratio of predetermined components included in a normalized zeta potential distribution 4 that is determined through the following four zeta potential measurement steps (i) to (iv) and any one of the following steps (v) to (vii) is not more than the specific range:

step (i): measuring a zeta potential distribution 1 without applying an electric field to the particles in a measuring cell, followed by normalizing the zeta potential distribution 1 to obtain a normalized zeta potential distribution 1;

step (ii): measuring a zeta potential distribution 2 by applying an electric field of 1200 V/m to the particles in the measuring cell, followed by normalizing the zeta potential distribution 2 to obtain a normalized zeta potential distribution 2;

step (iii): calculating a difference between the normalized zeta potential distributions 1 and 2 to obtain a normalized zeta potential distribution 3;

step (iv): preparing a histogram of the normalized zeta potential distribution 3 at intervals of 1 mV and normalizing the histogram to obtain the normalized zeta potential distribution 4;

step (v): reading out a region (area) in the range of from 0 to -55 mV in the normalized zeta potential distribution 4 and a region (area) interposed between a curve of the normalized zeta potential distribution 4 and a line indicating a scattering intensity of zero (0) to determine the scattering intensity area ratio (%) of the components included in the range of from 0 to -55 mV;

step (vi): reading out a region (area) in the range of from 0 to -58 mV in the normalized zeta potential distribution 4 and a region (area) interposed between a curve of the normalized zeta potential distribution 4 and a line indicating a scattering intensity of zero (0) to determine the scattering intensity area ratio (%) of the components included in the range of from 0 to -58 mV; and

step (vii): reading out a region (area) in the range of from 0 to -60 mV in the normalized zeta potential distribution 4 and a region (area) interposed between a curve of the normalized zeta potential distribution 4 and a line indicating a scattering intensity of zero (0) to determine the scattering intensity area ratio (%) of the components included in the range of from 0 to -60 mV.

[2] A process for producing the water-based pigment dispersion for ink-jet printing as described in the above aspect [1], including the following production steps (1), (2) and (3):

production step (1): subjecting a mixture including water, a pigment, a water-dispersible polymer and an organic solvent having a solubility in water of less than 40% by mass as measured at 20°C to dispersing treatment until a volume-average particle size of the pigment particles is decreased to not more than 180 nm as measured by a dynamic light scattering method to obtain a pigment dispersion;

production step (2): adding water to the pigment dispersion obtained in the production step (1), followed by maintaining the resulting dispersion at a temperature of not higher than 40°C for a period of not less than 4 h and not more than 48 h; and

production step (3): removing the organic solvent from the pigment dispersion obtained in the production step (2) to obtain the water-based pigment dispersion.

BRIEF DESCRIPTION OF THE DRAWINGS

FIG. 1 is a schematic view showing step (i) or step (2-i) for obtaining a normalized zeta potential distribution 1.
FIG. 2 is a schematic view showing step (ii) or step (2-ii) for obtaining a normalized zeta potential distribution 2.
FIG. 3 is a schematic view showing step (iii) or step (2-iii) for obtaining a normalized zeta potential distribution 3.
FIG. 4 is a schematic view showing step (iv) or step (2-iv) for obtaining a normalized zeta potential distribution 4.
FIG. 5 is a schematic view showing regions for which the scattering intensity area ratio is to be determined.

DETAILED DESCRIPTION OF THE INVENTION

In the technology described in Patent Literature 1, the rate of migration of dispersed particles when applying a constant electric field thereto is measured by an image processing method to define a standard deviation thereof, etc., from the measured value. However, in order to attain a good ejection durability of the ink, the influence of Brownian motion of the dispersed particles themselves on the measured value is to be taken into consideration. For this reason, the zeta potential value measured in Patent Literature 1 is not necessarily usable as an index of an imaging performance of the ink. Thus, the technology described in Patent Literature 1 in which the zeta potential is used as an index for evaluating properties of the ink tends to be insufficient to provide a water-based pigment dispersion for ink-jet printing which is excellent in ejection durability as well as optical density when used in a printer for a long period of time.

The present invention relates to a water-based pigment dispersion for ink-jet printing which is excellent in ejection durability and can be prevented from suffering from deterioration in optical density even when used for printing over a long period of time, and a process for producing the water-based dispersion.

In addition, the present invention relates to a process for producing a water-based pigment dispersion for ink-jet printing which is excellent in ejection durability and can provide an ink having a high optical density, and a water-based pigment dispersion for ink-jet printing which can be produced by the process.

The present inventors have considered that in order to solve the aforementioned conventional problems, it is desired that electric repulsion between pigment particles obtained by adsorbing a polymer onto a surface of a pigment becomes uniform over an entire part of an ink while enhancing adsorptivity of the polymer to the pigment. On the other hand, it has been considered that the zeta potential distribution from which an influence of Brownian motion of the particles is excluded can be measured by evaluating a difference between two zeta potential distributions prepared by application of different electric field intensities from each other which are determined under the condition in which an electric field intensity applied to the pigment particles is variously controlled, as an index indicating uniformity of the electric repulsion between the pigment particles, and many studies have been made on the basis of this consideration.

As a result, it has been found that by obtaining the two zeta potential distributions and determining the difference therebetween through specific processing, it is possible to measure the zeta potential distribution from which the influence of Brownian motion of the particles is excluded. In addition, it has been found that there exists a close relationship between the thus measured zeta potential distribution and ejection durability of the ink. Further, it has been found that in the zeta potential distribution obtained through the below-mentioned zeta potential measurement steps, by setting the conditions in which a scattering intensity area ratio of components included in a specific range thereof is not more than a specific value, it is possible to obtain a pigment dispersion for ink-jet printing.

Furthermore, it has been found that with respect to adsorption of the polymer onto the pigment, by using a specific organic solvent having a low solubility in water, and dispersing the pigment particles therein such that an average particle size of the pigment particles in the resulting dispersion is not more than a specific value and then maintaining the pigment particles therein for a specific period of time under the environmental conditions in which equilibrium of adsorption and desorption between the polymer and the pigment is established, it is possible to obtain a water-based pigment dispersion having a uniform electric repulsion between the pigment particles.

That is, the present invention relates to the following aspects [1] to [7].

[1] A water-based pigment dispersion for ink-jet printing including pigment particles and water, in which a scattering intensity area ratio of components included in the range of from 0 to -55 mV in a normalized zeta potential distribution 4 that is determined through the following zeta potential measurement steps (i) to (iv) and step (v) is not more than 5% (hereinafter referred to as a first embodiment of a "first invention"):

step (i): measuring a zeta potential distribution 1 without applying an electric field to the particles in a measuring cell, followed by normalizing the zeta potential distribution 1 to obtain a normalized zeta potential distribution 1;
step (ii): measuring a zeta potential distribution 2 by applying an electric field of 1200 V/m to the particles in the measuring cell, followed by normalizing the zeta potential distribution 2 to obtain a normalized zeta potential distribution 2;
step (iii): calculating a difference between the normalized zeta potential distributions 1 and 2 to obtain a normalized zeta potential distribution 3;
step (iv): preparing a histogram of the normalized zeta potential distribution 3 at intervals of 1 mV and normalizing the histogram to obtain the normalized zeta potential distribution 4; and
step (v): reading out a region (area) in the range of from 0 to -55 mV in the normalized zeta potential distribution 4 and a region (area) interposed between a curve of the normalized zeta potential distribution 4 and a line indicating a scattering intensity of zero (0) to determine the scattering intensity area ratio (%) of the components included in the range of from 0 to -55 mV.

[2] A water-based pigment dispersion for ink-jet printing including pigment particles and water, in which a scattering intensity area ratio of components included in the range of from 0 to -58 mV in a normalized zeta potential distribution 4 that is determined through the above zeta potential measurement steps (i) to (iv) and the following step (vi) is not more than 10% (hereinafter referred to as a second embodiment of the "first invention"):
step (vi): reading out a region (area) in the range of from 0 to -58 mV in the normalized zeta potential distribution 4 and a region (area) interposed between a curve of the normalized zeta potential distribution 4 and a line indicating a scattering intensity of zero (0) to determine the scattering intensity area ratio (%) of the components included in the range of from 0 to -58 mV.

[3] A water-based pigment dispersion for ink-jet printing including pigment particles and water, in which a scattering intensity area ratio of components included in the range of from 0 to -60 mV in a normalized zeta potential distribution 4 that is determined through the above zeta potential measurement steps (i) to (iv) and the following step (vii) is not more than 40% (hereinafter referred to as a third embodiment of the "first invention"):
step (vii): reading out a region (area) in the range of from 0 to -60 mV in the normalized zeta potential distribution 4 and a region (area) interposed between a curve of the normalized zeta potential distribution 4 and a line indicating a scattering intensity of zero (0) to determine the scattering intensity area ratio (%) of the components included in the range of from 0 to -60 mV.

[4] A process for producing a water-based pigment dispersion for ink-jet printing, including the step of controlling a scattering intensity area ratio of components included in the range of from 0 to -55 mV in a normalized zeta potential distribution 4 that is determined through the above zeta potential measurement steps (i) to (iv) and step (v) to not more than 5%.

[5] A process for producing a water-based pigment dispersion for ink-jet printing, including the step of controlling a scattering intensity area ratio of components included in the range of from 0 to -58 mV in a normalized zeta potential distribution 4 that is determined through the above zeta potential measurement steps (i) to (iv) and step (vi) to not more than 10%.

[6] A process for producing a water-based pigment dispersion for ink-jet printing, including the step of controlling a scattering intensity area ratio of components included in the range of from 0 to -60 mV in a normalized zeta potential distribution 4 that is determined through the above zeta potential measurement steps (i) to (iv) and step (vii) to not more than 40%.

[7] The process for producing a water-based pigment dispersion for ink-jet printing according to any one of the above aspects [4] to [6], including the following production steps (1), (2) and (3) (hereinafter referred to as a "second invention"):

production step (1): subjecting a mixture including water, a pigment, a water-dispersible polymer and an organic solvent having a solubility in water of less than 40% by mass as measured at 20°C to dispersing treatment until a volume-average particle size of the pigment particles is decreased to not more than 180 nm as measured by a dynamic light scattering method to obtain a pigment dispersion;

production step (2): adding water to the pigment dispersion obtained in the production step (1), followed by maintaining the resulting dispersion at a temperature of not higher than 40°C for a period of not less than 4 h and not more than 48 h; and

production step (3): removing the organic solvent from the pigment dispersion obtained in the production step (2) to obtain the water-based pigment dispersion.

According to the first invention, it is possible to provide a water-based pigment dispersion for ink-jet printing which is excellent in ejection durability and can be prevented from suffering from deterioration in optical density even when used for printing over a long period of time, and a process for producing the water-based dispersion.

In addition, according to the second invention, it is possible to provide a process for producing a water-based pigment dispersion for ink-jet printing which is excellent in ejection durability and can provide an ink having a high optical density, and a water-based pigment dispersion for ink-jet printing which is produced by the process.

The water-based pigment dispersion for ink-jet printing according to the first invention (hereinafter referred to merely as an "water-based pigment dispersion") includes the aforementioned first to third embodiments.

The reason why the water-based ink including the water-based pigment dispersion according to the first invention, and the water-based ink including the water-based pigment dispersion obtained by the process for producing a water-based pigment dispersion according to the second invention are excellent in ejection durability, is considered as follow, though it is not clearly determined.

That is, a print head for ink-jet printing is manufactured by a microprocessing technology such as semiconductor production processes, and it is required that an ink is smoothly flowed through fine pipes or channels provided in the print head. When using an ink that tends to suffer from deposition in a flow path of the ink, etc., since a resistance to flow of the ink is likely to occur in the flow path, droplets of the ink tend to have an unstable meniscus shape in ejection nozzles, so that there tends to occur such a fear that ejection of the ink therefrom becomes unstable and finally impossible.

In addition, in particular, the water-based ink containing a polymer dispersant tends to suffer from increase in viscosity thereof at an opening portion of the respective ejection nozzles when dried up at the opening portion, sot that there tends to occur clogging of the ejection nozzles or deviation of ejection direction of the ink. It is considered that the above phenomenon such as clogging of the ejection nozzles or deviation of ejection direction of the ink is caused by narrowed distance between the pigment particles (i.e., pigment particles onto which the water-dispersible polymer is adsorbed, or pigment-containing polymer particles) owing to removal of water upon drying at the opening portion of the ejection nozzles, and by reduction in charge repulsion force between the pigment particles and therefore aggregation of the pigment particles owing to reduced dielectric constant of a whole solvent component contained in the ink.

Further, it is considered that the phenomenon of aggregation of the pigment particles is also concerned with a so-called hetero aggregation phenomenon. The hetero aggregation is such a phenomenon that if pigment particles that are different in zeta potential from each other are present in the same system, the particles are likely to undergo aggregation therebetween, and such an aggregation phenomenon generally tends to be caused between different kinds of particles.

In the first invention, in the normalized zeta potential distribution 4, the scattering intensity area ratio of the components included in the specific range near to a potential value of zero (0) in which a charge repulsion force between the pigment particles is small, is controlled to not more than the specific value. As a result of controlling the scattering intensity area ratio to the specific value, it is considered that the condition of adsorption of the water-dispersible polymer onto a surface of the pigment becomes uniform, so that it is possible to reduce variation in zeta potential of the pigment particles, and therefore suppress occurrence of hetero aggregation between the pigment particles and improve ejection durability of the resulting ink.

Also, in the second invention, in the production step (2), the pigment dispersion containing the pigment particles having a volume-average particle size of not more than 180 nm is maintained at a temperature of not higher than 40°C for a predetermined period of time. As a result, it is considered that the condition of adsorption of the water-dispersible polymer onto a surface of the pigment becomes uniform, so that it is possible to reduce variation in zeta potential of the pigment particles, and therefore suppress occurrence of hetero aggregation between the pigment particles and improve ejection durability of the resulting ink.

In the device using a thermal print head for ink-jet printing, water contained in the ink is subjected to membrane boiling by heating the ink using a heater to generate a shock wave by which the ink is ejected therefrom. In this case, the surface of the heater is heated to a temperature of not lower than 300°C, so that there tends to occur such a phenomenon that an ink component is scorched onto the surface of the heater, i.e., a so-called kogation phenomenon, thereby posing such a problem that the ink has a poor ejection durability.

The heater is mainly formed of a metal oxide. Therefore, under the environment of a pH of from 7 to 11 in which an anionic ink is stabilized, the surface of the heater is charged slightly negatively, so that a cation in the ink, for example, a sodium ion derived from a neutralizing agent, is attracted thereto. On the other hand, the pigment particles in the ink are also charged negatively, so that the sodium ion is also attracted to a surface of the pigment.

As the pigment particles approach a surface of the heater, the concentration of the sodium ion present between the heater and the pigment particles is increased, so that an osmotic pressure is generated owing to a difference between the above sodium ion concentration and that in a bulk of the ink, and the pigment particles undergo a repulsion force owing to the osmotic pressure in the direction spaced apart from the heater.

For this reason, if the pigment particles have a high surface potential, the pigment particles themselves can hardly approach the heater and therefore can be prevented from suffering from scorching on a heated surface layer of the heater.

In the first invention, in the normalized zeta potential distribution 4, the scattering intensity area ratio of the components included in the specific range is controlled to not more than the specific value. As a result, it is considered that variation in zeta potential of the pigment particles is reduced, and the amount of the pigment particles having a low surface potential is reduced, so that the pigment particles can be prevented from suffering from scorching on the surface layer of the heater.

In the second invention, in the production step (2), the pigment dispersion is maintained at a temperature of not higher than 40°C for a predetermined period of time. As a result, it is considered that variation in zeta potential of the pigment particles is reduced, and the amount of the pigment particles having a low surface potential is reduced, so that the pigment particles can be prevented from suffering from scorching on the surface layer of the heater.

In addition, the print head for ink-jet printing is constructed of combination of different kinds of materials such as metals, polymer adhesives, etc. Therefore, if the print head filled with the ink is allowed to stand as such under the stand-by condition, there tends to occur such a fear that the life time of the print head is shortened owing to elution of the metal materials or swelling of the polymer adhesives, etc. To solve this problem, in some of the printers, it has been attempted to recover the ink from the print head into an ink tank, etc., so as to prolong the life time of the print head. Further, it has been attempted to suppress occurrence of clogging in the print head by subjecting the ink to filtration upon recovering the ink. On the other hand, in the case where the pigment has a high surface potential, aggregation between the pigment particles when passing through a filter in a flow path of the ink is suppressed, occurrence of clogging in the filter is reduced, and supply of the ink upon ejection or a negative pressure applied to meniscus of the ink in nozzles of the print head is stabilized even when used for a long period of time. In the first invention, in the normalized zeta potential distribution 4, the scattering intensity area ratio of the components included in the specific range is controlled to not more than the specific value. As a result, it is considered that variation in zeta potential of the pigment particles is reduced, and the amount of the pigment particles having a low surface potential is reduced, so that the pigment particles can be prevented from suffering from occurrence of clogging in the filter.

[Water-based pigment dispersion for Ink-Jet Printing: First Invention]

The water-based pigment dispersion of the first invention can be suitably produced by the below-mentioned process for producing the water-based pigment dispersion in which pigment particles onto which the water-dispersible polymer is adsorbed, or pigment-containing polymer particles (as solid components) are dispersed in a medium containing water as a main component. Examples of the configuration of the pigment particles include the particle configuration in which the pigment is enclosed within the polymer, the particle configuration in which the pigment is uniformly dispersed in the polymer, the particle configuration in which the pigment is exposed onto a surface of the respective polymer particles, the particle configuration in which a hydrophilic functional group forms a covalent bond with a surface of the pigment directly or through the other functional group, and the like.

In the first embodiment of the water-based pigment dispersion according to the present invention, from the viewpoints of improving ejection durability of the resulting ink and obtaining printed matters having a high optical density, the scattering intensity area ratio of the components included in the range of from 0 to -55 mV is not more than 5%, preferably not more than 2%, more preferably not more than 1%, and even more preferably 0%, on the basis of the whole components.

In the second embodiment of the water-based pigment dispersion according to the present invention, from the viewpoints of improving ejection durability of the resulting ink and obtaining printed matters having a high optical density, the scattering intensity area ratio of the components included in the range of from 0 to -58 mV is not more than 10%, preferably not more than 7%, more preferably not more than 4%, and even more preferably not more than 2%, on the basis of the whole components.

In the third embodiment of the water-based pigment dispersion according to the present invention, from the viewpoints of improving ejection durability of the resulting ink and obtaining printed matters having a high optical density, the scattering intensity area ratio of the components included in the range of from 0 to -60 mV is not more than 40%, preferably not more than 20%, more preferably not more than 10%, and even more preferably not more than 5%, on the basis of the whole components.

The aforementioned scattering intensity area ratio is determined through the following zeta potential measurement steps (i) to (iv) and any one of the following steps (v) to (vii):

step (i): measuring a zeta potential distribution 1 without applying an electric field to the particles in a measuring cell, followed by normalizing the zeta potential distribution 1 to obtain a normalized zeta potential distribution 1;
step (ii): measuring a zeta potential distribution 2 by applying an electric field of 1200 V/m to the particles in the measuring cell, followed by normalizing the zeta potential distribution 2 to obtain a normalized zeta potential distribution 2;
step (iii): calculating a difference between the normalized zeta potential distributions 1 and 2 to obtain a normalized zeta potential distribution 3;
step (iv): preparing a histogram of the normalized zeta potential distribution 3 at intervals of 1 mV and normalizing the histogram to obtain a normalized zeta potential distribution 4;
step (v): reading out a region in the range of from 0 to -55 mV in the normalized zeta potential distribution 4 and a region (area) interposed between a curve of the normalized zeta potential distribution 4 and a line indicating a scattering intensity of zero (0) to determine the scattering intensity area ratio (%) of the components included in the range of from 0 to -55 mV;
step (vi): reading out a region in the range of from 0 to -58 mV in the normalized zeta potential distribution 4 and a region (area) interposed between a curve of the normalized zeta potential distribution 4 and a line indicating a scattering intensity of zero (0) to determine the scattering intensity area ratio (%) of the components included in the range of from 0 to -58 mV; and
step (vii): reading out a region in the range of from 0 to -60 mV in the normalized zeta potential distribution 4 and a region (area) interposed between a curve of the normalized zeta potential distribution 4 and a line indicating a scattering intensity of zero (0) to determine the scattering intensity area ratio (%) of the components included in the range of from 0 to -60 mV.

Meanwhile, the expression "without applying an electric field to the particles" means applying an electric field of 0 V/m to the particles. The normalization of the zeta potential distribution is performed by dividing respective peak intensities measured every 1 mV in the zeta potential distribution by a value of a maximum peak intensity therein such that the maximum peak intensity becomes 1.

The zeta potential distribution is preferably measured by a dynamic light scattering method, and more specifically may be measured by the method described in Examples below.

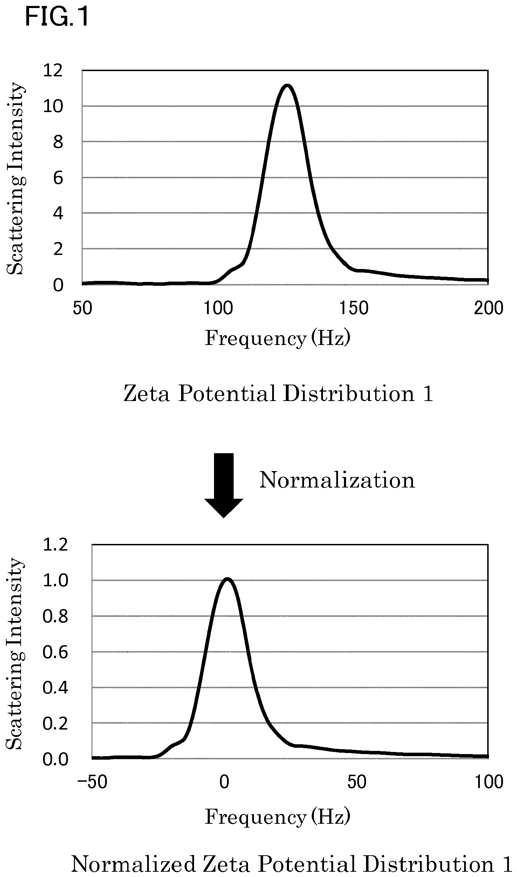

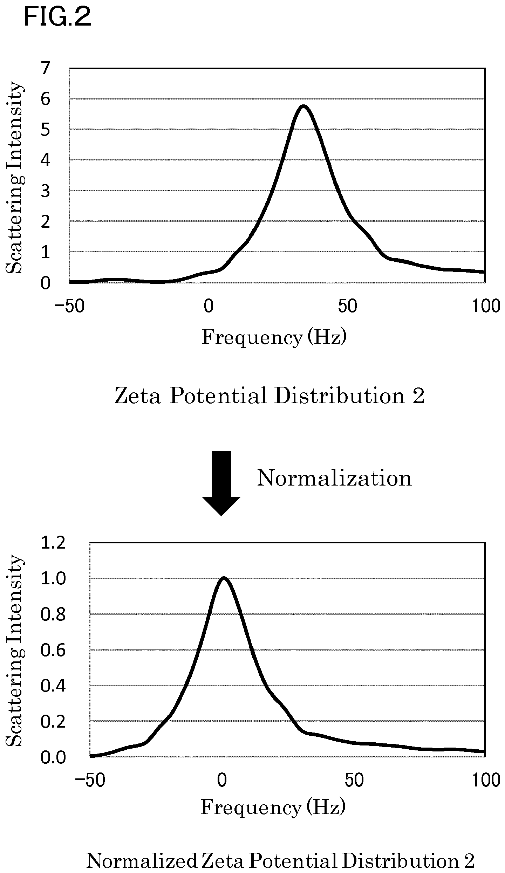

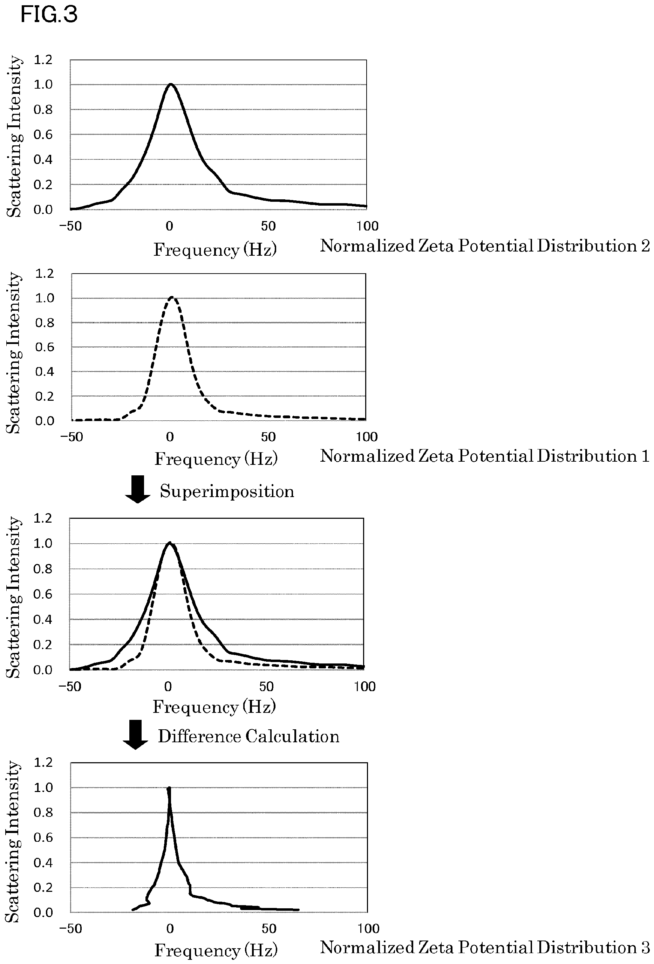

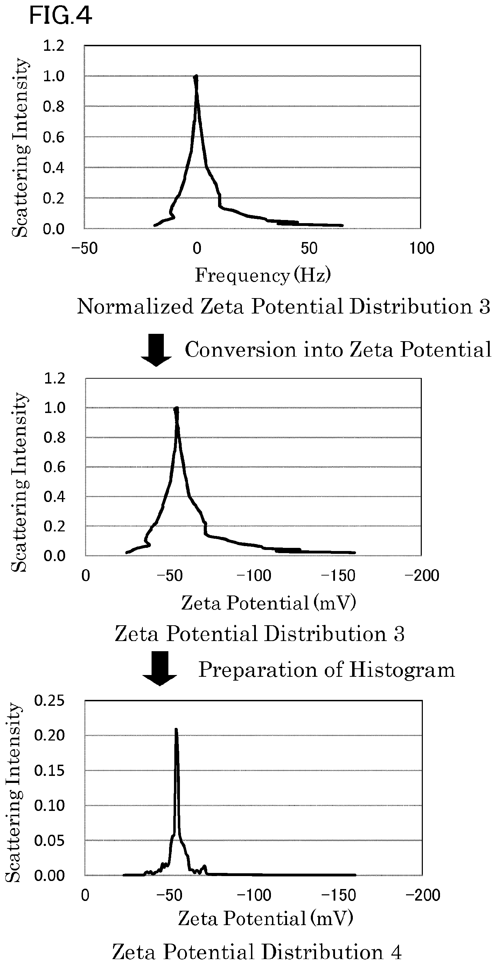

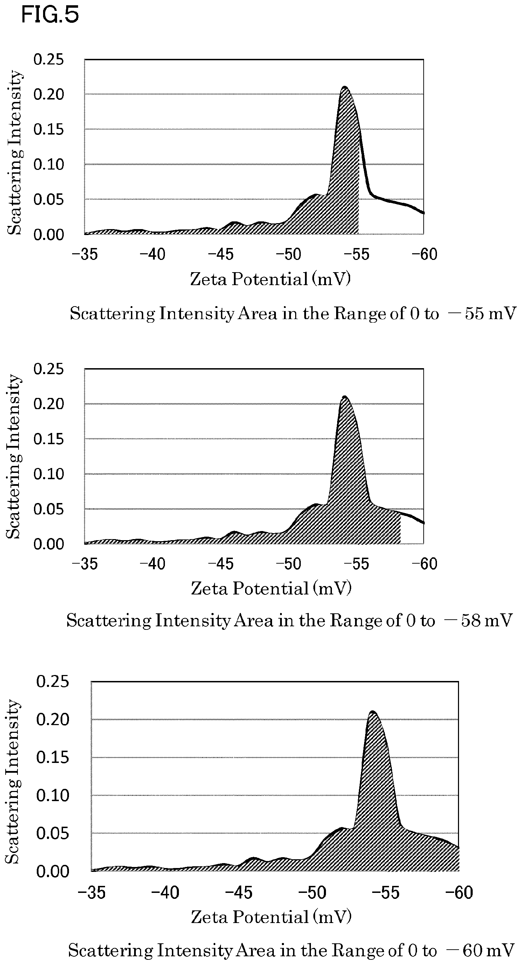

FIG. 1 is a schematic view showing step (i) for obtaining a normalized zeta potential distribution 1; FIG. 2 is a schematic view showing step (ii) for obtaining a normalized zeta potential distribution 2; FIG. 3 is a schematic view showing step (iii) for obtaining a normalized zeta potential distribution 3; FIG. 4 is a schematic view showing step (iv) for obtaining a normalized zeta potential distribution 4; and FIG. 5 is a schematic view showing regions for which the scattering intensity area ratio is to be determined.

The water-based pigment dispersion of the present invention is preferably capable of satisfying the requirements of any two of the aforementioned first to third embodiments, and more preferably capable of satisfying the requirements of all of the first to third embodiments.

Examples of the method of reducing the scattering intensity area ratio in the predetermined zeta potential range include a) a method of applying an electric field to the water-based pigment dispersion to remove the particles having a low zeta potential therefrom; b) a method of conducting production step (2) (step of maintaining the dispersion at a specific temperature) in the below-mentioned process for producing the water-based pigment dispersion; c) a method of adding monomers including a polymerizable surfactant monomer containing a hydrophilic functional group and a polymerization initiator, if required, together with a chain transfer agent, to the system in which the pigment is dispersed to conduct a polymerization reaction thereof under the predetermined conditions, then subjecting the reaction solution to acid precipitation (aciding-out) to obtain a precipitate, rinsing the resulting precipitate with a hydrophilic organic solvent, neutralizing the precipitate with potassium hydroxide, etc., so as to control a degree of neutralization thereof to about 20 mol% on the basis of a total amount of an acid in the pigment dispersion, dispersing the thus neutralized precipitate again in an aqueous solution, and subjecting the resulting dispersion to centrifugal separation to thereby remove the particles having a less acid content therefrom; d) a method of adding an acid or a salt to the system in which the pigment is dispersed with a resin to precipitate the resin on a surface of the pigment by salting-out or acid precipitation, adding to the precipitate, a non-water-soluble organic solvent in an amount of about 5% by weight based on the resulting precipitate, allowing the resulting mixture to stand in a sealed state at an ordinary temperature for a period of not less than 24 h, and then adding an alcohol as an additional solvent to the mixture to remove the acid or salt therefrom by ultrafiltration, etc.; e) a method of previously dissolving pigment particles, an ultraviolet curable resin, an ultraviolet initiator, etc., in a good solvent, adding the resulting solution to a poor solvent and simultaneously exposing the solution to ultraviolet radiation to thereby obtain a composite of the pigment particles and resin, adding dropwise the thus obtained composite into an alcohol having a low dielectric constant, removing low zeta potential particles precipitated, from the resulting mixture, and then removing residual monomers from the mixture by ultrafiltration, etc., using an alcohol having a high dielectric constant as a solvent; f) a method of adding a compound containing both a hydrophilic functional group and a functional group such as an epoxy group which has a crosslinkability with a resin to the system in which the pigment is dispersed with a resin, promoting a crosslinking reaction between the resin and compound by heating, etc., to increase an amount of the hydrophilic functional group held in the pigment particles and the dispersing resin, adding dropwise the resulting product into an alcohol having a low dielectric constant, removing low zeta potential particles precipitated, from the resulting mixture, and then removing residual unreacted crosslinking agent from the mixture by ultrafiltration, etc., using an alcohol solvent having a high dielectric constant as a solvent; and the like.

The water-based pigment dispersions according to the first to third embodiments of the present invention are in the form of a water-based dispersion containing at least the pigment particles and water. The pigment particles may be constituted of a self-dispersible pigment or a pigment dispersed with a water-dispersible polymer.

As the apparatus for dispersing the pigment in water, there may be mentioned the below-mentioned mixing and stirring apparatuses, high-speed stirring mixers, kneaders, high-pressure homogenizers and media-type dispersers.

The volume-average particle size of the pigment particles in the water-based pigment dispersions according to the first to third embodiments of the present invention is preferably not less than 40 nm, more preferably not less than 50 nm, and even more preferably not less than 60 nm, and is also preferably not more than 150 nm, more preferably not more than 140 nm, and even more preferably not more than 130 nm, from the viewpoints of improving dispersion stability of the water-based pigment dispersion as well as storage stability and ejection durability of the resulting water-based ink, and obtaining printed matters having a high optical density.

The volume-average particle size of the pigment particles may be controlled by dispersing treatment in the below-mentioned production step (1), removal of volatile bases, classification, etc.

Meanwhile, the volume-average particle size of the pigment particles may be measured by a dynamic light scattering method, i.e., the method described in Examples below.

The surface tension (as measured at 20°C) of the respective water-based pigment dispersions according to the first to third embodiments of the present invention is preferably not less than 30 mN/m, and more preferably not less than 35 mN/m, and is also preferably not more than 65 mN/m, and more preferably not more than 60 mN/m.

The 20% by mass (solid content) viscosity (as measured at 20°C) of the respective water-based pigment dispersions according to the first to third embodiments of the present invention is preferably not less than 2 mPa · s, and is also preferably not more than 6 mPa · s, and more preferably not more than 5 mPa · s, in order to obtain a water-based ink having a desired viscosity.

Meanwhile, the viscosity may be measured by the method described in Examples below.

[Pigment]

The pigment used in the present invention (including the first invention and the second invention; hereinafter defined in the same way) may be either an inorganic pigment or an organic pigment. The inorganic or organic pigment may be used in combination with an extender pigment, if required.

Examples of the inorganic pigment include carbon blacks, metal oxides, metal sulfides and metal chlorides. Of these inorganic pigments, in particular, carbon blacks are preferably used for black inks. The carbon blacks may include furnace blacks, thermal lamp blacks, acetylene blacks and channel blacks.

Examples of the organic pigment include azo pigments, diazo pigments, phthalocyanine pigments, quinacridone pigments, isoindolinone pigments, dioxazine pigments, perylene pigments, perinone pigments, thioindigo pigments, anthraquinone pigments and quinophthalone pigments.

Specific examples of the preferred organic pigments include one or more pigments selected from the group consisting of commercially available products marketed under the tradenames of C.I. Pigment Yellow, C.I. Pigment Red, C.I. Pigment Violet, C.I. Pigment Blue and C.I. Pigment Green with various product numbers. Examples of the extender pigment include silica, calcium carbonate and talc.

As the pigment, there may also be used a so-called self-dispersible pigment. The self-dispersible pigment as used herein means an inorganic or organic pigment onto a surface of which at least one hydrophilic functional group (including an anionic hydrophilic group such as a carboxy group and a sulfonic group or a cationic hydrophilic group such as a quaternary ammonium group) is bonded either directly or through the other atom group to thereby render the pigment dispersible in an aqueous medium without using a surfactant or a resin. Examples of the other atom group used herein include an alkanediyl group having 1 to 12 carbon atoms, a phenylene group and a naphthylene group.

The amount of the hydrophilic functional group to be bonded to the surface of the self-dispersible pigment is not particularly limited, and is preferably not less than 100 μmol and not more than 3,000 μmol per 1 g of the self-dispersible pigment. The amount of a carboxy group as the hydrophilic functional group bonded to the surface of the self-dispersible pigment is preferably not less than 200 μmol and not more than 700 μmol per 1 g of the self-dispersible pigment.

Examples of commercially available products of the self-dispersible pigment include "CAB-O-JET 200", "CAB-O-JET 300", "CAB-O-JET 352K", "CAB-O-JET 250C", "CAB-O-JET 260M", "CAB-O-JET 270Y", "CAB-O-JET 450C", "CAB-O-JET 465M", "CAB-O-JET 470Y" and "CAB-O-JET 480V" all available from Cabot Corp., "BONJET CW-1" and "BONJET CW-2" both available from Orient Chemical Industries Co., Ltd., and "Aqua-Black 162" available from Tokai Carbon Co., Ltd. The above pigments may be used alone or in the form of a mixture of any two or more thereof.

The content of the pigment in the pigment dispersion is preferably not less than 5% by mass, more preferably not less than 8% by mass, and even more preferably not less than 10% by mass, and is also preferably not more than 30% by mass, more preferably not more than 25% by mass, and even more preferably not more than 20% by mass, from the viewpoints of improving dispersion stability of the water-based pigment dispersion as well as storage stability and ejection durability of the water-based ink obtained from the water-based pigment dispersion (hereinafter also referred to merely as a "water-based ink") and enhancing productivity of the water-based pigment dispersion.

[Water-Dispersible Polymer]

The water-dispersible polymer as used herein means a polymer that is dispersible in water or a medium containing water as a main component at an ordinary temperature. Examples of the water-dispersible polymer used in the present invention include polyesters, polyurethanes and vinyl-based polymers. Among these polymers, preferred are vinyl-based polymers obtained by addition-polymerizing vinyl monomers from the viewpoint of improving dispersion stability of the water-based pigment dispersion as well as storage stability of the resulting water-based ink.

The water-dispersible polymer used in the present invention is also preferably a polymer that is produced by copolymerizing an ionic group-containing monomer (hereinafter also referred to merely as an "ionic monomer"). Moreover, the water-dispersible polymer used in the present invention is preferably a polymer that is produced by copolymerizing a monomer mixture containing a hydrophobic monomer (a) (hereinafter also referred to as a "component (a)") and an ionic monomer (b) (hereinafter also referred to as a "component (b)") (such a mixture is hereinafter also referred to merely as a "monomer mixture"). The polymer contains a constitutional unit derived from the component (a) and a constitutional unit derived from the component (b).

Also, it is preferred that in the polymer used in the present invention, a nonionic monomer (c) (hereinafter also referred to as a "component (c)") is further used as a monomer component thereof, from the viewpoint of improving dispersion stability of the water-based pigment dispersion as well as storage stability of the resulting water-based ink.

The vinyl-based polymer used in the present invention is preferably a vinyl-based polymer that is produced by copolymerizing a monomer mixture containing the component (a) and the component (b), and further containing the component (c), if required, from the viewpoint of improving dispersion stability of the water-based pigment dispersion as well as storage stability of the resulting water-based ink. The vinyl-based polymer contains a constitutional unit derived from the component (a) and a constitutional unit derived from the component (b), and further contains a constitutional unit derived from the component (c), if required.

<Hydrophobic Monomer (a)>

Examples of the hydrophobic monomer (a) include an aromatic group-containing monomer and an alkyl (meth)acrylate.

The aromatic group-containing monomer is preferably a vinyl monomer containing an aromatic group having 6 to 22 carbon atoms, and more preferably a styrene-based monomer or an aromatic group-containing (meth)acrylate, etc.

As the styrene-based monomer, styrene and 2-methyl styrene are preferred, and styrene is more preferred.

As the aromatic group-containing (meth)acrylate, benzyl (meth)acrylate and phenoxyethyl (meth)acrylate are preferred, and benzyl (meth)acrylate is more preferred.

From the viewpoint of improving dispersion stability of the water-based pigment dispersion as well as storage stability of the resulting water-based ink, as the hydrophobic monomer (a), the aromatic group-containing (meth)acrylate is preferably used, and the aromatic group-containing (meth)acrylate is also preferably used in combination with the styrene-based monomer.

Meanwhile, the "(meth)acrylate" means both a methacrylate and an acrylate.

As the alkyl (meth)acrylate, there are preferably used those alkyl (meth)acrylates containing an alkyl group having 1 to 22 carbon atoms and preferably 6 to 18 carbon atoms. Examples of the alkyl (meth)acrylate include methyl (meth)acrylate, ethyl (meth)acrylate, (iso)propyl (meth)acrylate, (iso- or tertiary-)butyl (meth)acrylate, (iso)amyl (meth)acrylate, cyclohexyl (meth)acrylate, 2-ethylhexyl (meth)acrylate, (iso)octyl (meth)acrylate, (iso)decyl (meth)acrylate, (iso)dodecyl (meth)acrylate and (iso)stearyl (meth)acrylate.

Meanwhile, the terms "(iso- or tertiary-) " and "(iso)" as used herein mean both the structure in which the groups expressed by "iso or tertiary" and "iso" respectively are present, and the structure in which these groups are not present (i.e., normal).

As the hydrophobic monomer (a), a macromer may also be used. The macromer is in the form of a compound containing a polymerizable functional group at one terminal end thereof and having a number-average molecular weight of from 500 to 100,000. From the viewpoint of improving dispersion stability of the water-based pigment dispersion as well as storage stability of the resulting water-based ink, the number-average molecular weight of the macromer is preferably not less than 1,000 and not more than 10,000.

Meanwhile, the number-average molecular weight of the macromer may be measured by gel permeation chromatography using chloroform containing 1 mmol/L of dodecyl dimethylamine as a solvent and using monodisperse polystyrene having a known molecular weight as a reference standard substance.

The polymerizable functional group bonded to one terminal end of the macromer is preferably a (meth)acryloyloxy group, and more preferably a methacryloyloxy group.

As the macromer, from the viewpoint of improving dispersion stability of the water-based pigment dispersion as well as storage stability of the resulting water-based ink, there are preferably used an aromatic group-containing monomer-based macromer and a silicone-based macromer. Among these macromers, more preferred is the aromatic group-containing monomer-based macromer.

Examples of an aromatic group-containing monomer constituting the aromatic group-containing monomer-based macromonomer include those aromatic group-containing monomers as described with respect to the above hydrophobic monomer (a). Among these aromatic group-containing monomers, preferred are styrene and benzyl (meth)acrylate, and more preferred is styrene.

Specific examples of commercially available products of the styrene-based macromer include "AS-6(S)", "AN-6(S)" and "HS-6(S)" (tradenames all available from Toagosei Co., Ltd.), etc.

Examples of the silicone-based macromer include organopolysiloxanes containing a polymerizable functional group bonded to one terminal end thereof, etc.

<Ionic Monomer (b)>

The ionic monomer (b) may be used as a monomer component of the polymer, from the viewpoint of improving dispersion stability of the water-based pigment dispersion as well as storage stability of the resulting water-based ink.

Examples of the ionic monomer include anionic monomers and cationic monomers. Among these monomers, from the viewpoints of improving dispersion stability of the water-based pigment dispersion as well as storage stability of the resulting water-based ink, and further enhancing ejection durability thereof, preferred are anionic monomers.

Examples of the anionic monomers include carboxylic acid monomers, sulfonic acid monomers and phosphoric acid monomers.

Specific examples of the carboxylic acid monomers include acrylic acid, methacrylic acid, crotonic acid, itaconic acid, maleic acid, fumaric acid, citraconic acid and 2-methacryloyloxymethylsuccinic acid.

Specific examples of the sulfonic acid monomers include styrenesulfonic acid, 2-acrylamido-2-methylpropanesulfonic acid and 3-sulfopropyl (meth)acrylate.

Specific examples of the phosphoric acid monomers include vinylphosphonic acid, vinyl phosphate, bis(methacryloxyethyl)phosphate, diphenyl-2-acryloyloxyethyl phosphate and diphenyl-2-methacryloyloxyethyl phosphate.

Among the anionic monomers, from the viewpoint of improving dispersion stability of the water-based pigment dispersion as well as storage stability of the resulting water-based ink, preferred are the carboxylic acid monomers, more preferred is at least one compound selected from the group consisting of acrylic acid and methacrylic acid, and even more preferred is methacrylic acid.

<Nonionic Monomer (c)>

Examples of the nonionic monomer (c) include 2-hydroxyethyl (meth)acrylate, 3-hydroxypropyl (meth)acrylate, polyalkylene glycol (meth)acrylates such as polypropylene glycol (n = 2 to 30 wherein n represents an average molar number of addition of oxyalkylene groups: hereinafter defined in the same way) (meth)acrylate, alkoxy polyalkylene glycol (meth)acrylates such as methoxy polyethylene glycol (n = 1 to 30) (meth)acrylate and 2-ethylhexyl polyethylene glycol (n = 1 to 30) (meth)acrylate, and aralkoxy polyalkylene glycol (meth)acrylates such as phenoxy (ethylene glycol/propylene glycol copolymer) (n = 1 to 30 in which n for ethylene glycol: 1 to 29) (meth)acrylate. Among these nonionic monomers, preferred are the alkoxy polyalkylene glycol (meth)acrylates.

Specific examples of commercially available products of the component (c) include "NK ESTER M-20G", "NK ESTER M-40G", "NK ESTER M-90G" and "NK ESTER EH-4E" all available from Shin-Nakamura Chemical Co., Ltd.; and "BLEMMER PE-90", "BLEMMER PE-200", "BLEMMER PE-350", "BLEMMER PME-100", "BLEMMER PME-200", "BLEMMER PME-400", "BLEMMER PP-500", "BLEMMER PP-800", "BLEMMER AP-150", "BLEMMER AP-400", "BLEMMER AP-550", "BLEMMER 50PEP-300", "BLEMMER 50POEP-800B" and "BLEMMER 43PAPE-600B" all available from NOF Corporation. Of these commercially available products of the components (c), in particular, from the viewpoint of attaining good optical density of the resulting water-based ink, "NK ESTER EH-4E" (polyethylene glycol [n = 4] methacrylate 2-ethylhexyl ether) available from Shin-Nakamura Chemical Co., Ltd., is preferably used.

The aforementioned components (a) to (c) may be respectively used alone or in combination of any two or more thereof.

Upon production of the water-dispersible polymer, the contents of the aforementioned components (a) to (c) in the monomer mixture (contents of non-neutralized components; hereinafter defined in the same way), i.e., the contents of the constitutional units derived from the components (a) to (c) in the water-dispersible polymer are as follows.

The content of the component (a) is preferably not less than 40% by mass, more preferably not less than 45% by mass, and even more preferably not less than 48% by mass, and is also preferably not more than 85% by mass, more preferably not more than 80% by mass, and even more preferably not more than 75% by mass, from the viewpoint of improving dispersion stability of the water-based pigment dispersion as well as storage stability and ejection durability of the resulting water-based ink.

The content of the component (b) is preferably not less than 15% by mass, and is also preferably not more than 25% by mass, more preferably not more than 23% by mass, and even more preferably not more than 21% by mass, from the viewpoint of improving dispersion stability of the water-based pigment dispersion as well as storage stability and ejection durability of the resulting water-based ink.

The content of the component (c) is preferably not less than 0% by mass, more preferably not less than 10% by mass, and even more preferably not less than 20% by mass, and is also preferably not more than 40% by mass, more preferably not more than 35% by mass, and even more preferably not more than 32% by mass, from the viewpoint of improving dispersion stability of the water-based pigment dispersion as well as storage stability and ejection durability of the resulting water-based ink.

The water-dispersible polymer may be produced by copolymerizing a mixture containing the aforementioned hydrophobic monomer (a) and ionic monomer (b), if required together with the nonionic monomer (c) and the other monomers, by known polymerization methods. Among the known polymerization methods, preferred is a solution polymerization method.

The organic solvent used in the solution polymerization method is not particularly limited, and methyl ethyl ketone, toluene, methyl isobutyl ketone, etc., are preferably used from the viewpoint of attaining good copolymerizability of the monomers.

The polymerization may be carried out in the presence of a polymerization initiator or a chain transfer agent. As the polymerization initiator, there may be used known radical polymerization initiators, e.g., azo compounds such as 2,2'-azobis(isobutyronitrile) and 2,2'-azobis(2,4-dimethylvaleronitrile), and organic peroxides such as t-butyl peroxyoctoate and dibenzoyl peroxide. Among these polymerization initiators, preferred are azo compounds, and more preferred is 2,2'-azobis(2,4-dimethylvaleronitrile).

As the chain transfer agent, there may be used known chain transfer agents. Examples of the chain transfer agent include mercaptans such as octyl mercaptan and 2-mercaptoethanol, and thiuram disulfides. Of these chain transfer agents, preferred are mercaptans, and more preferred is 2-mercaptoethanol.

EP 3 072 935 B1

The preferred polymerization conditions may vary depending upon the kind of polymerization initiator used, etc. The polymerization temperature is preferably not lower than 50°C, more preferably not lower than 60°C, and even more preferably not lower than 70°C, and is also preferably not higher than 90°C, and more preferably not higher than 85°C. The polymerization time is preferably not less than 1 h, more preferably not less than 4 h, and even more preferably not less than 6 h, and is also preferably not more than 20 h, more preferably not more than 15 h, and even more preferably not more than 10 h. Further, the polymerization is preferably conducted in a nitrogen gas atmosphere or an atmosphere of an inert gas such as argon.

After completion of the polymerization reaction, unreacted monomers, etc., may be removed from the obtained reaction solution by reprecipitation, membrane separation, chromatography, extraction, etc.

(Weight-Average Molecular Weight of Water-Dispersible Polymer)

From the viewpoints of improving dispersion stability of the water-based pigment dispersion as well as storage stability and ejection durability of the resulting water-based ink, and obtaining printed matters having a high optical density, the weight-average molecular weight of the water-dispersible polymer is preferably not less than 5,000, more preferably not less than 10,000, even more preferably not less than 30,000, further even more preferably not less than 40,000, and further even more preferably not less than 50,000, and is also preferably not more than 500,000, more preferably not more than 300,000, even more preferably not more than 200,000, further even more preferably not more than 150,000, and further even more preferably not more than 100,000.

Meanwhile, the weight-average molecular weight may be determined by the method described in Examples below.

In the case where the water-dispersible polymer is used in the respective water-based pigment dispersions according to the first to third embodiments of the present invention, the mass ratio of the pigment to the water-dispersible polymer [pigment/water-dispersible polymer] is preferably not more than 80/20, more preferably not more than 75/25, and even more preferably not more than 70/30, and is also preferably not less than 50/50, more preferably not less than 60/40, and even more preferably not less than 65/35, from the viewpoint of improving dispersion stability of the water-based pigment dispersion as well as storage stability and ejection durability of the resulting water-based ink.

The water-based pigment dispersions according to the first to third embodiments of the present invention may be directly used as a water-based ink. However, if required, the water-based pigment dispersions may be further compounded with various ordinary additives such as a wetting agent, a penetrant, a dispersant, a viscosity controller, a defoaming agent, a mildew-proof agent and a rust preventive.

[Water-Based Ink for Ink-Jet Printing]

The water-based ink for ink-jet printing includes the water-based pigment dispersion for ink-jet printing according to the present invention, and may be produced by adding water and various additives to the water-based pigment dispersion.

The contents of the respective components in the water-based ink are as follows.

The content of the pigment in the water-based ink is preferably not less than 1% by mass, more preferably not less than 2% by mass, even more preferably not less than 3% by mass, and further even more preferably not less than 4% by mass, and is also preferably not more than 20% by mass, more preferably not more than 15% by mass, even more preferably not more than 10% by mass, and further even more preferably not more than 8% by mass, from the viewpoints of improving storage stability and ejection durability of the water-based ink and obtaining printed matters having a high optical density.

In the case of using the water-dispersible polymer, the content of the water-dispersible polymer in the water-based ink is preferably not less than 1% by mass, more preferably not less than 1.2% by mass, even more preferably not less than 1.5% by mass, and further even more preferably not less than 1.8% by mass, and is also preferably not more than 5% by mass, more preferably not more than 4% by mass, even more preferably not more than 3% by mass, and further even more preferably not more than 2.5% by mass, from the viewpoints of improving storage stability and ejection durability of the water-based ink and obtaining printed matters having a high optical density.

The content of water in the water-based ink is preferably not less than 50% by mass, more preferably not less than 60% by mass, and even more preferably not less than 75% by mass, and is also preferably not more than 95% by mass, more preferably not more than 90% by mass, and even more preferably not more than 85% by mass, from the viewpoint of improving storage stability and ejection durability of the water-based ink.

The static surface tension of the water-based ink as measured at 20°C is preferably not less than 25 mN/m, more preferably not less than 30 mN/m, and even more preferably not less than 32 mN/m, and is also preferably not more than 45 mN/m, more preferably not more than 40 mN/m, and even more preferably not more than 38 mN/m, from the viewpoint of improving ejection durability of the water-based ink.

12

The viscosity of the water-based ink as measured at 35°C is preferably not less than 1 mPa • s, more preferably not less than 1.5 mPa • s, and even more preferably not less than 2 mPa • s, and is also preferably not more than 10 mPa • s, more preferably not more than 7 mPa • s, and even more preferably not more than 4 mPa • s, from the viewpoint of improving ejection durability of the water-based ink.

The water-based ink may be further compounded with various additives usually used for the water-based ink, if required, in order to control properties of the resulting water-based ink. Examples of the additives include a wetting agent, a penetrant, a dispersant such as a surfactant, a viscosity controller such as hydroxypropyl cellulose, hydroxyethyl cellulose and polyvinyl alcohol, a defoaming agent such as silicone oils, a mildew-proof agent and a rust preventive.

Specific examples of the wetting agent and the penetrant include polyhydric alcohols as well as ethers, acetates and the like thereof, such as ethylene glycol, propylene glycol, diethylene glycol, triethylene glycol, polyethylene glycol, glycerol, trimethylol propane and diethylene glycol diethyl ether. Of these compounds, preferred are glycerol, triethylene glycol and trimethylol propane. In addition, of these compounds, from the viewpoints of imparting steric repulsion between the pigment particles without disturbing charge repulsion force between the pigment particles in the water-based ink to suppress aggregation of the pigment particles, and thereby further improving ejection durability of the water-based ink, preferred is polyethylene glycol. The average molecular weight of the polyethylene glycol is preferably not less than 100, more preferably not less than 200, and even more preferably not less than 300, from the viewpoint of imparting steric repulsion between the pigment particles, and is also preferably not more than 5,000, more preferably not more than 3,000, even more preferably not more than 2,000, and further even more preferably not more than 1,500, from the viewpoint of suppressing increase in viscosity of the resulting water-based ink.

Specific examples of the surfactant include nonionic surfactants such as ethyleneoxide adducts of acetylene diol, etc.

The volume-average particle size of the pigment particles in the resulting water-based ink as measured by a dynamic light scattering method is preferably not less than 40 nm, more preferably not less than 50 nm, and even more preferably not less than 60 nm, and is also preferably not more than 150 nm, more preferably not more than 140 nm, and even more preferably not more than 130 nm, from the viewpoint of preventing clogging of nozzles in a printer and attaining good dispersion stability of the water-based ink.

Meanwhile, the volume-average particle size of the pigment particles may be measured by the method described in Examples below.

The ink-jet printing method used in the present invention is not particularly limited, and may be applied to any ejection method including an electro-mechanical conversion method such as a piezoelectric printing method, an electro-thermal conversion method such as a thermal printing method.

The pigment particles contained in the water-based ink including the water-based pigment dispersion for ink-jet printing according to the present invention have the effect of suppressing occurrence of kogation phenomenon, and therefore the water-based ink can be suitably used for the thermal ink-jet printing method.

[Process for Producing Water-Based Pigment Dispersion for Ink-Jet Printing]

The process for producing the water-based pigment dispersion for ink-jet printing according to the present invention preferably includes the step of controlling the scattering intensity area ratio of the components included in the range of from 0 to -55 mV in the normalized zeta potential distribution 4 that is determined through the aforementioned zeta potential measurement steps (i) to (iv) and step (v) to not more than 5% (hereinafter also referred to as a "step (a)").

In addition, the process for producing the water-based pigment dispersion for ink-jet printing according to the present invention preferably includes the step of controlling the scattering intensity area ratio of the components included in the range of from 0 to -58 mV in the normalized zeta potential distribution 4 that is determined through the aforementioned zeta potential measurement steps (i) to (iv) and step (vi) to not more than 10% (hereinafter also referred to as a "step (b)").

Further, the process for producing the water-based pigment dispersion for ink-jet printing according to the present invention preferably includes the step of controlling the scattering intensity area ratio of the components included in the range of from 0 to -60 mV in the normalized zeta potential distribution 4 that is determined through the aforementioned zeta potential measurement steps (i) to (iv) and step (vii) to not more than 40% (hereinafter also referred to as a "step (c)").

Furthermore, the process for producing the water-based pigment dispersion for ink-jet printing according to the present invention more preferably includes at least two steps selected from the group consisting of the step (a), step (b) and step (c).

The water-based pigment dispersion for ink-jet printing according to the present invention may be produced by the method of dispersing the pigment particles in water. When using a self-dispersible pigment as the pigment, the self-dispersible pigment is added into water, and the resulting mixture is subjected to dispersing treatment to thereby obtain the water-based pigment dispersion. In this case, the degree of neutralization of the self-dispersible pigment as well as the degree of dispersion thereof may be suitably adjusted to control a zeta potential distribution of the resulting water-based pigment dispersion.

In the case where the pigment dispersed with the water-dispersible polymer is used as the pigment particles, the process for producing the water-based pigment dispersion is preferably performed by the second invention including the following production steps (1), (2) and (3), though not particularly limited thereto:

production step (1): subjecting a mixture including water, the pigment, the water-dispersible polymer and an organic solvent having a solubility in water of less than 40% by mass as measured at 20°C to dispersing treatment until a volume-average particle size of the pigment particles is decreased to not more than 180 nm as measured by a dynamic light scattering method to obtain a pigment dispersion;

production step (2): adding water to the pigment dispersion obtained in the production step (1), followed by maintaining the resulting dispersion at a temperature of preferably not higher than 40°C for a period of preferably not less than 4 h and not more than 48 h; and

production step (3): removing the organic solvent from the pigment dispersion obtained in the production step (2) to obtain the water-based pigment dispersion.

<Production Step (1)>

In the production step (1), a mixture including water, the pigment, the water-dispersible polymer and an organic solvent having a solubility in water of less than 40% by mass as measured at 20°C is subjected to dispersing treatment until a volume-average particle size of the pigment particles is decreased to not more than 180 nm as measured by a dynamic light scattering method to thereby obtain a pigment dispersion.

(Content of Water-Dispersible Polymer)

The content of the water-dispersible polymer in a whole amount of the mixture used in the production step (1) is preferably not less than 1.5% by mass, more preferably not less than 2.0% by mass, and even more preferably not less than 2.5% by mass, and is also preferably not more than 15% by mass, more preferably not more than 10% by mass, and even more preferably not more than 7.0% by mass, from the viewpoint of improving dispersion stability of the water-based pigment dispersion as well as storage stability and ejection durability of the resulting water-based ink.

(Organic Solvent)

In the present invention, it is desired that the organic solvent used therein has a high affinity to the polymer, and on the other hand, exhibits a low solubility in water used as a main medium in the production step (1). From such a viewpoint, it is necessary that the solubility of the organic solvent in water as measured at 20°C is less than 40% by mass. The solubility of the organic solvent in water as measured at 20°C is preferably not more than 35% by mass, and more preferably not more than 30% by mass, and is also preferably not less than 0% by mass, and more preferably not less than 10% by mass.

Examples of the organic solvent include aliphatic alcohols having 2 to 8 carbon atoms, ketones, ethers and esters. Specific examples of the aliphatic alcohols include n-butanol, tertiary butanol, isobutanol and diacetone alcohol. Specific examples of the ketones include methyl ethyl ketone, diethyl ketone and methyl isobutyl ketone. Specific examples of the ethers include dibutyl ether, tetrahydrofuran and dioxane. Among these organic solvents, from the viewpoint of improving wettability to the pigment and adsorptivity of the polymer onto the pigment, preferred are ketones, and more preferred is methyl ethyl ketone (having a solubility in water of 22% by mass).

The content of the organic solvent in a whole amount of the mixture used in the production step (1) is preferably not less than 10% by mass, more preferably not less than 13% by mass, and even more preferably not less than 15% by mass, and is also preferably not more than 30% by mass, more preferably not more than 25% by mass, and even more preferably not more than 22% by mass, from the viewpoint of improving wettability to the pigment and adsorptivity of the polymer onto the pigment. Meanwhile, in the case where two or more organic solvents are contained in the mixture, the total amount of the two or more organic solvents is calculated as the amount of the organic solvent used in production step (1) (hereinafter defined in the same way).

The mass ratio of the water-dispersible polymer to the organic solvent (water-dispersible polymer /organic solvent) in production step (1) is preferably not less than 0.10, more preferably not less than 0.20, and even more preferably not less than 0.25, and is also preferably not more than 0.60, more preferably not more than 0.50, and even more preferably not more than 0.45, from the viewpoint of improving wettability to the pigment and adsorptivity of the polymer to the pigment.

The content of water in the pigment dispersion used in the production step (1) is preferably not less than 50% by mass, more preferably not less than 55% by mass, and even more preferably not less than 60% by mass, and is also preferably not more than 80% by mass, more preferably not more than 75% by mass, and even more preferably not more than 65% by mass, from the viewpoints of improving dispersion stability of the water-based pigment dispersion and enhancing productivity of the water-based pigment dispersion.

The mass ratio of the organic solvent to water (organic solvent/water) in production step (1) is preferably not less than 0.27, and more preferably not less than 0.29, and is also preferably not more than 0.50, from the viewpoints of promoting the dispersing step owing to improved wettability of the pigment, and improving adsorptivity of the polymer to the pigment.

(Neutralization of Polymer)

In the present invention, from the viewpoint of improving dispersion stability of the water-based pigment dispersion as well as storage stability and ejection durability of the resulting water-based ink, a neutralizing agent is preferably used in order to neutralize an ionic group, preferably an anionic group, of the water-dispersible polymer. When using the neutralizing agent, the neutralization is preferably conducted such that the pH value of the water-based pigment dispersion falls within the range of from 7 to 11.

Examples of the neutralizing agent used in the case where the ionic group of the water-dispersible polymer is an anionic group include hydroxides of alkali metals, volatile bases such as ammonia, and organic amines such as methylamine, dimethylamine, trimethylamine, ethylamine, diethylamine, triethylamine, triethanolamine and tributylamine. Of these neutralizing agents, from the viewpoint of improving dispersion stability of the water-based pigment dispersion as well as storage stability and ejection durability of the resulting water-based ink, preferred are hydroxides of alkali metals and volatile bases, and more preferred are hydroxides of alkali metals.

Specific examples of the hydroxides of alkali metals include lithium hydroxide, sodium hydroxide, potassium hydroxide and cesium hydroxide. Of these hydroxides of alkali metals, preferred is sodium hydroxide.

The neutralizing agent is preferably used in the form of an aqueous neutralizing agent solution from the viewpoint of sufficiently accelerating neutralization of the polymer. From the viewpoint of sufficiently accelerating neutralization of the polymer, the concentration of the aqueous neutralizing agent solution is preferably not less than 3% by mass, more preferably not less than 10% by mass, and even more preferably not less than 15% by mass, and is also preferably not more than 30% by mass, and more preferably not more than 25% by mass.

The neutralizing agent and the aqueous neutralizing agent solution are respectively used alone or in a mixture of any two or more kinds thereof.

The degree of neutralization of the polymer as calculated from the amount of the neutralizing agent used is preferably not less than 60 mol%, more preferably not less than 80 mol%, and even more preferably not less than 100 mol%, and is also preferably not more than 400 mol%, more preferably not more than 200 mol%, and even more preferably not more than 150 mol%, from the viewpoint of improving dispersion stability of the water-based pigment dispersion as well as storage stability and ejection durability of the resulting water-based ink.

The degree of neutralization of the polymer as used herein means the value as calculated from the amount of the neutralizing agent used, i.e., the value obtained by dividing a mole equivalent of the neutralizing agent by a molar amount of the ionic group contained in the polymer. The degree of neutralization of the polymer in the case where the ionic group is an anionic group may be calculated according to the following formula:

$$\{[\text{mass (g) of neutralizing agent/equivalent of neutralizing agent}]/$$

$$[\text{acid value of polymer (KOHmg/g) x mass (g) of polymer}/(56 \times 1000)]\} \times 100.$$

In addition, in the case where the volatile base is used as the neutralizing agent, the degree of neutralization of the pigment dispersion in the production step (1) as well as the degree of neutralization of each of the pigment dispersion and the water-based ink produced through the production step (3) may be suitably varied. More specifically, ammonia, etc., used as the neutralizing agent is charged in an excessive amount based on a molar amount of the anionic group of the polymer in the production step (1), and the volatile base such as ammonia, etc., is removed in the production step (3), so that the degree of neutralization of the resulting water-based ink can be controlled to a desired value. The degree of neutralization of the polymer when using the volatile base as the neutralizing agent is preferably not less than 0 mol%, and is also preferably not more than 300 mol%, more preferably not more than 100 mol%, and even more preferably not more than 50 mol%. Meanwhile, the degree of neutralization of 0 mol% in the case where the volatile base is used as the neutralizing agent means that no volatile base is used.

(Dispersing Treatment)

In the production step (1), the aforementioned mixture is subjected to dispersing treatment to obtain the pigment dispersion. The volume-average particle size of the pigment particles obtained after the dispersing treatment is preferably not more than 180 nm, more preferably not more than 150 nm, and even more preferably not more than 125 nm, and is also preferably not less than 30 nm, and more preferably not less than 50 nm, from the viewpoint of preventing precipitation of the pigment particles in the resulting water-based ink. The volume-average particle size of the pigment particles may be measured by the method described in Examples below.

The pigment particles may be atomized into fine particles having a desired volume-average particle size by subjecting the mixture to a substantial dispersing treatment only one time. However, it is preferred that the mixture is subjected to two-stage dispersing treatment, i.e., the mixture is first subjected to a preliminary dispersing treatment, and then to the substantial dispersing treatment by applying a shear stress thereto so as to control the volume-average particle size of the obtained pigment particles to a desired value.

The temperature used in the preliminary dispersing treatment is preferably not lower than -5°C, more preferably not lower than 0°C, and even more preferably not lower than 10°C, and is also preferably not higher than 40°C, more preferably not higher than 20°C, and even more preferably not higher than 10°C. The dispersing time in the preliminary dispersing treatment is preferably not less than 1 h, more preferably not less than 2 h, and even more preferably not less than 5 h, and is also preferably not more than 30 h, more preferably not more than 10 h, and even more preferably not more than 5 h.

When subjecting the aforementioned mixture to the preliminary dispersing treatment, there may be used ordinary mixing and stirring devices such as anchor blades and disper blades. Of these mixing and stirring devices, preferred are high-speed stirring mixers such as "Ultra Disper" (tradename: available from Asada Iron Works Co., Ltd.), "Ebara Milder" (tradename: available from Ebara Corp.) and "TK Homo Mixer" (tradename: available from Primix Corp.).

As a means for applying a shear stress to the mixture in the substantial dispersing treatment, there may be used, for example, kneading machines such as roll mills, kneaders and extruders, high-pressure homogenizers such as "Microfluidizer" (tradename: available from Microfluidics Corp.), and media-type dispersers such as paint shakers and beads mills. Examples of the commercially available media-type dispersers include "Ultra Apex Mill" (tradename: available from Kotobuki Industries Co., Ltd.) and "Pico Mill" (tradename: available from Asada Iron Works Co., Ltd.). These devices may be used in combination of any two or more thereof. Among these devices, the high-pressure homogenizers are preferably used from the viewpoint of reducing the particle size of the pigment.

In the case where the substantial dispersing treatment is conducted using the high-pressure homogenizer, the particle size of the pigment can be adjusted to a desired value by controlling the treating pressure and the number of passes through the homogenizer used in the substantial dispersing treatment.

The treating pressure used in the substantial dispersing treatment is preferably not less than 60 MPa, more preferably not less than 100 MPa, and even more preferably not less than 150 MPa, and is also preferably not more than 250 MPa, more preferably not more than 200 MPa, and even more preferably not more than 180 MPa.

Also, the number of passes through the homogenizer used in the substantial dispersing treatment is preferably not less than 3, more preferably not less than 10, and even more preferably not less than 15, and is also preferably not more than 30, more preferably not more than 25, and even more preferably not more than 20.

<Production Step (2)>

In the production step (2), water is added to the pigment dispersion obtained in the production step (1), followed by maintaining the resulting dispersion at a temperature of preferably not higher than 40°C for a period of preferably not less than 4 h and not more than 48 h.

When adding water to the pigment dispersion and then maintaining the dispersion at a temperature of preferably not higher than 40°C for a period of preferably not less than 4 h and not more than 48 h, it is possible to enhance uniformity of adsorption of the polymer onto the pigment.

The temperature at which the pigment dispersion to which water is added is to be maintained is preferably not lower than 0°C, more preferably not lower than 10°C, and even more preferably not lower than 15°C, and is also preferably not higher than 35°C, more preferably not higher than 30°C, and even more preferably not higher than 25°C, from the viewpoint of improving ejection durability of the resulting water-based ink.

The time period for which the pigment dispersion to which water is added is to be maintained is preferably not less than 6 h, and is also preferably not more than 36 h, and more preferably not more than 24 h, from the viewpoint of improving ejection durability of the resulting water-based ink.

The mass ratio of the organic solvent to water (organic solvent/water) in production step (2) is preferably not more than 0.29, and more preferably not more than 0.27, and is also preferably not less than 0.10, more preferably not less than 0.15, and even more preferably not less than 0.20.

In the production step (2), upon maintaining the pigment dispersion to which water is added, it is preferred that the pigment dispersion is held in a sealed condition under reduced pressure. The reason therefor is considered to be that under the reduced pressure, a gas dissolved in the pigment dispersion tends to be released in the form of bubbles, so that the hydrophobic group of the polymer tends to be readily adsorbed onto the surface of the pigment.

The pressure within the sealed vessel is preferably not less than 5 kPa, more preferably not less than 8 kPa, and even more preferably not less than 10 kPa, and is also preferably not more than 100 kPa, and more preferably not more than 50 kPa.

In addition, the concentration (solid content) of non-volatile components in the water-based pigment dispersion obtained after controlling the mass ratio (organic solvent/water) therein is preferably not less than 5% by mass, more preferably not less than 10% by mass, and even more preferably not less than 15% by mass, and is also preferably not more than 30% by mass, more preferably not more than 20% by mass, and even more preferably not more than 18% by mass, from the viewpoints of suppressing formation of aggregates in the course of removing the organic solvent in the production step (3) and enhancing productivity of the water-based pigment dispersion.

In the production step (2), after adding water to the pigment dispersion, the resulting dispersion may be stirred or unstirred. However, from the viewpoint of maintaining the pigment dispersion at a uniform liquid temperature, the dispersion is preferably stirred within the range capable of suppressing foaming thereof.

<Production Step (3)>

In the production step (3), the organic solvent is removed from the pigment dispersion obtained in the production step (2) to obtain the water-based pigment dispersion.

The method of removing the organic solvent from the pigment dispersion is not particularly limited, and the removal of the organic solvent may be conducted by any suitable known methods. Meanwhile, a part of water contained in the pigment dispersion obtained in the production step (2) may be removed simultaneously with the organic solvent.

Examples of the apparatus for removing the organic solvent in the production step (3) include a thin film distillation apparatus such as a batch simple distillation device, a reduced pressure distillation device and a flush evaporator, a rotary distillation device and a stirring evaporator. Among these apparatuses, from the viewpoint of efficient removal of the organic solvent, preferred are a rotary distillation device and a stirring evaporator, more preferred is a rotary distillation device, and even more preferred is a rotary evaporator.

The temperature of the pigment dispersion upon removing the organic solvent therefrom may appropriately vary depending upon the kind of organic solvent to be removed. The temperature of the pigment dispersion upon removing the organic solvent therefrom under reduced pressure is preferably not lower than 40°C, and is also preferably not higher than 80°C, more preferably not higher than 70°C, and even more preferably not higher than 65°C. The pressure of the reaction system upon removal of the organic solvent is preferably not less than 5 kPa, more preferably not less than 8 kPa, and even more preferably not less than 10 kPa, and is also preferably not more than 50 kPa, more preferably not more than 30 kPa, and even more preferably not more than 20 kPa. The time required for removal of the organic solvent is preferably not less than 1 h, more preferably not less than 2 h, and even more preferably not less than 5 h, and is also preferably not more than 24 h, more preferably not more than 12 h, and even more preferably not more than 10 h.

The organic solvent is preferably substantially completely removed from the thus obtained water-based pigment dispersion. However, the residual organic solvent may be present in the water-based pigment dispersion unless the objects and effects of the present invention are adversely affected by the residual organic solvent. The content of the residual organic solvent in the resulting water-based pigment dispersion is preferably not more than 0.1% by mass and more preferably not more than 0.01% by mass.

The concentration of the non-volatile components (solid content) in the resulting water-based pigment dispersion is preferably not less than 10% by mass, more preferably not less than 15% by mass, and even more preferably not less than 18% by mass, and is also preferably not more than 30% by mass, more preferably not more than 25% by mass, and even more preferably not more than 22% by mass, from the viewpoints of improving dispersion stability of the water-based pigment dispersion and facilitating production of the water-based ink.

[Process for Producing Water-Based Pigment Dispersion for Ink-Jet Printing: Second Invention]

The process for producing the water-based pigment dispersion for ink-jet printing according to the present invention includes the following production steps (1), (2) and (3):

production step (1): subjecting a mixture including water, the pigment, the water-dispersible polymer and an organic solvent having a solubility in water of less than 40% by mass as measured at 20°C to dispersing treatment until a volume-average particle size of the pigment particles is decreased to not more than 180 nm as measured by a dynamic light scattering method to obtain a pigment dispersion;

production step (2): adding water to the pigment dispersion obtained in the production step (1), followed by maintaining the resulting dispersion at a temperature of not higher than 40°C for a period of not less than 4 h and not more than 48 h; and

production step (3): removing the organic solvent from the pigment dispersion obtained in the production step (2) to obtain the water-based pigment dispersion.

The details of the production steps (1), (2) and (3) are the same as those described above.

The water-based pigment dispersion for ink-jet printing which is obtained by the process for producing the water-based pigment dispersion for ink-jet printing according to the second invention is in the form of a dispersion in which the pigment particles onto which the water-dispersible polymer is adsorbed or the pigment-containing polymer particles (solids) are dispersed in a medium containing water as a main component. Examples of the configuration of the pigment particles include the particle configuration in which the pigment is enclosed within the polymer, the particle configuration in which the pigment is uniformly dispersed in the polymer, the particle configuration in which the pigment is exposed onto a surface of the respective polymer particles, and the like.

From the viewpoints of improving ejection durability of the resulting water-based ink and obtaining printed matters having a high optical density, the water-based pigment dispersion of the present invention preferably has the following scattering intensity area ratios in the zeta potential distribution obtained by excluding an influence of Brownian motion of the pigment particles in the water-based pigment dispersion as measured by a dynamic light scattering method.

That is, in the water-based pigment dispersion of the present invention, the scattering intensity area ratio of the components included in the range of from 0 to -60 mV in the normalized zeta potential distribution 4 that is determined through the following zeta potential measurement steps (2-i), (2-ii), (2-iii) and (2-iv) is preferably not more than 40%, more preferably not more than 20%, even more preferably not more than 10%, and further even more preferably not more than 5%:

step (2-i): measuring a zeta potential distribution 1 without applying an electric field to the particles in a measuring cell, followed by normalizing the zeta potential distribution 1 to obtain a normalized zeta potential distribution 1;
step (2-ii): measuring a zeta potential distribution 2 by applying a second electric field to the particles in the measuring cell, followed by normalizing the zeta potential distribution 2 to obtain a normalized zeta potential distribution 2;
step (2-iii): calculating a difference between the normalized zeta potential distributions 1 and 2 to obtain a normalized zeta potential distribution 3; and
step (2-iv): preparing a histogram of the normalized zeta potential distribution 3 at intervals of 1 mV and normalizing the histogram to obtain a normalized zeta potential distribution 4.

In addition, from the same viewpoints as described above, the scattering intensity area ratio of the components included in the range of from 0 to -58 mV in the normalized zeta potential distribution 4 that is determined through the aforementioned zeta potential measurement steps (2-i), (2-ii), (2-iii) and (2-iv) is preferably not more than 10%, more preferably not more than 7%, even more preferably not more than 4%, and further even more preferably not more than 2%, on the basis of the whole components. Furthermore, the scattering intensity area ratio of the components included in the range of from 0 to -55 mV in the normalized zeta potential distribution 4 that is determined through the aforementioned zeta potential measurement steps (2-i), (2-ii), (2-iii) and (2-iv) is preferably not more than 5%, more preferably not more than 2%, even more preferably not more than 1%, and further even more preferably 0%, on the basis of the whole components.

Meanwhile, the expression "without applying an electric field to the particles" means applying an electric field of 0 V/m to the particles. The normalization of the zeta potential distribution is conducted by dividing respective peak intensities measured every 1 mV in the zeta potential distribution by a value of a maximum peak intensity therein such that the maximum peak intensity becomes 1.

The zeta potential distribution is preferably measured by a dynamic light scattering method, and the scattering intensity area ratio of the zeta potential distribution may be measured by the method described in Examples below.

FIG. 1 is a schematic view showing step (2-i) for obtaining the normalized zeta potential distribution 1; FIG. 2 is a schematic view showing step (2-ii) for obtaining the normalized zeta potential distribution 2; FIG. 3 is a schematic view showing step (2-iii) for obtaining the normalized zeta potential distribution 3; FIG. 4 is a schematic view showing step (2-iv) for obtaining the normalized zeta potential distribution 4; and FIG. 5 is a schematic view showing regions for which the scattering intensity area ratio is to be determined.

The surface tension (as measured at 20°C) and 20% by mass (solid content) viscosity (as measured at 20°C) of the water-based pigment dispersion obtained by the production process according to the second invention are the same as the surface tension (as measured at 20°C) and 20% by mass (solid content) viscosity (as measured at 20°C) of the water-based pigment dispersion according to the first invention.

The water-based dispersion according to the present invention may be directly used as a water-based ink.

However, the water-based ink may also be prepared by further adding various ordinary additives such as a wetting agent, a penetrant, a dispersant, a viscosity controller, a defoaming agent, a mildew-proof agent and a rust preventive to the water-based dispersion, if required.

[Water-Based Ink for Ink-Jet Printing]

The water-based ink for ink-jet printing may be produced by adding various additives and water to the water-based pigment dispersion for ink-jet printing according to the present invention.

The contents of the pigment, water-dispersible polymer and water in the water-based ink including the water-based pigment dispersion obtained by the production process according to the second invention are the same as the contents of the pigment, water-dispersible polymer and water in the water-based ink including the water-based pigment dispersion according to the first invention.

The static surface tension as measured at 20°C and viscosity as measured at 35°C of the water-based ink including the water-based pigment dispersion obtained by the production process according to the second invention are the same as the static surface tension as measured at 20°C and viscosity as measured at 35°C of the water-based ink including the water-based pigment dispersion according to the first invention.

The water-based ink may be controlled in properties thereof by further adding the aforementioned additives usually used for the water-based ink, such as a wetting agent, a penetrant, a dispersant, a viscosity controller, a defoaming agent, a mildew-proof agent and a rust preventive thereto.

The volume-average particle size of the pigment particles in the water-based ink obtained in the second invention is the same as that of the first invention.

In addition, the ink-jet printing method used in the second invention is not particularly limited and may be the same as that used in the first invention, and is preferably applied to a thermal ink-jet printing method.

With respect to the aforementioned embodiments, the present invention further provides the following aspects relating to the water-based pigment dispersion for ink-jet printing and the water-based ink for ink-jet printing including the water-based dispersion.

<1> A water-based pigment dispersion for ink-jet printing including pigment particles and water, in which a scattering intensity area ratio of components included in the range of from 0 to -55 mV in a normalized zeta potential distribution 4 that is determined through the following zeta potential measurement steps (i) to (iv) and any one of the following steps (v) to (vii) is not more than 5%; a scattering intensity area ratio of components included in the range of from 0 to -58 mV in the normalized zeta potential distribution 4 is not more than 10%; and a scattering intensity area ratio of components included in the range of from 0 to -60 mV in the normalized zeta potential distribution 4 is not more than 40%:

step (i): measuring a zeta potential distribution 1 without applying an electric field to the particles in a measuring cell, followed by normalizing the zeta potential distribution 1 to obtain a normalized zeta potential distribution 1;

step (ii): measuring a zeta potential distribution 2 by applying an electric field of 1200 V/m to the particles in the measuring cell, followed by normalizing the zeta potential distribution 2 to obtain a normalized zeta potential distribution 2;

step (iii): calculating a difference between the normalized zeta potential distributions 1 and 2 to obtain a normalized zeta potential distribution 3;

step (iv): preparing a histogram of the normalized zeta potential distribution 3 at intervals of 1 mV and normalizing the histogram to obtain the normalized zeta potential distribution 4;

step (v): reading out a region (area) in the range of from 0 to -55 mV in the normalized zeta potential distribution 4 and a region (area) interposed between a curve of the normalized zeta potential distribution 4 and a line indicating a scattering intensity of zero (0) to determine the scattering intensity area ratio (%) of the components included in the range of from 0 to -55 mV;

step (vi): reading out a region (area) in the range of from 0 to -58 mV in the normalized zeta potential distribution 4 and a region (area) interposed between a curve of the normalized zeta potential distribution 4 and a line indicating a scattering intensity of zero (0) to determine the scattering intensity area ratio (%) of the components included in the range of from 0 to -58 mV; and

step (vii): reading out a region (area) in the range of from 0 to -60 mV in the normalized zeta potential distribution 4 and a region (area) interposed between a curve of the normalized zeta potential distribution 4 and a line indicating a scattering intensity of zero (0) to determine the scattering intensity area ratio (%) of the components included in the range of from 0 to -60 mV.

<2> A water-based pigment dispersion for ink-jet printing including pigment particles and water, in which a scattering intensity area ratio of components included in the range of from 0 to -55 mV in a normalized zeta potential distribution 4 that is determined through the aforementioned zeta potential measurement steps (i) to (iv) and the following step (v) is not more than 5%:

step (v): reading out a region (area) in the range of from 0 to -55 mV in the normalized zeta potential distribution 4 and a region (area) interposed between a curve of the normalized zeta potential distribution 4 and a line indicating a scattering intensity of zero (0) to determine the scattering intensity area ratio (%) of the components included in the range of from 0 to -55 mV.

<3> A water-based pigment dispersion for ink-jet printing including pigment particles and water, in which a scattering intensity area ratio of components included in the range of from 0 to -58 mV in a normalized zeta potential distribution 4 that is determined through the aforementioned zeta potential measurement steps (i) to (iv) and the following step (vi) is not more than 10%:

step (vi): reading out a region in the range of from 0 to -58 mV in the normalized zeta potential distribution 4 and a region (area) interposed between a curve of the normalized zeta potential distribution 4 and a line indicating a scattering intensity of zero (0) to determine the scattering intensity area ratio (%) of the components included in the range of from 0 to -58 mV.

<4> A water-based pigment dispersion for ink-jet printing including pigment particles and water, in which a scattering intensity area ratio of components included in the range of from 0 to -60 mV in a normalized zeta potential distribution 4 that is determined through the aforementioned zeta potential measurement steps (i) to (iv) and the following step (vii) is not more than 40%:

step (vii): reading out a region in the range of from 0 to -60 mV in the normalized zeta potential distribution 4 and a region (area) interposed between a curve of the normalized zeta potential distribution 4 and a line indicating a scattering intensity of zero (0) to determine the scattering intensity area ratio (%) of the components included in the range of from 0 to -60 mV.

<5> The water-based pigment dispersion according to any one of the aspects <1> to <4>, wherein the respective zeta potential distribution are measured by a dynamic light scattering method.

<6> The water-based pigment dispersion according to any one of the aspects <1> to <5>, wherein a water-dispersible polymer is produced by copolymerizing a monomer mixture containing an ionic group-containing monomer (b).

<7> The water-based pigment dispersion according to any one of the aspects <1> to <6>, wherein the water-dispersible polymer is produced by copolymerizing a monomer mixture containing a hydrophobic monomer (a) and the ionic group-containing monomer (b).

<8> The water-based pigment dispersion according to any one of the aspects <1> to <7>, wherein the water-dispersible polymer is produced by copolymerizing a monomer mixture containing the hydrophobic monomer (a) and the ionic group-containing monomer (b), and further containing a nonionic monomer (c).

<9> The water-based pigment dispersion according to the aspect <7> or <8>, wherein a content of a constitutional unit derived from the hydrophobic monomer (a) in the water-dispersible polymer is preferably not less than 40% by mass, more preferably not less than 45% by mass, and even more preferably not less than 48% by mass, and is also preferably not more than 85% by mass, more preferably not more than 80% by mass, and even more preferably not more than 75% by mass.

<10> The water-based pigment dispersion according to any one of the aspects <6> to <9>, wherein a content of a constitutional unit derived from the ionic group-containing monomer (b) in the water-dispersible polymer is preferably not less than 15% by mass, and is also preferably not more than 25% by mass, more preferably not more than 23% by mass, and even more preferably not more than 21% by mass.

<11> The water-based pigment dispersion according to any one of the aspects <8> to <10>, wherein a content of a constitutional unit derived from the nonionic monomer (c) in the water-dispersible polymer is preferably not less than 0% by mass, more preferably not less than 10% by mass, and even more preferably not less than 20% by mass, and is also preferably not more than 40% by mass, more preferably not more than 35% by mass, and even more preferably not more than 32% by mass.

<12> The water-based pigment dispersion according to any one of the aspects <6> to <11>, wherein a weight-average molecular weight of the water-dispersible polymer is preferably not less than 5,000, more preferably not less than 10,000, even more preferably not less than 30,000, further even more preferably not less than 40,000, and further even more preferably not less than 50,000, and is also preferably not more than 500,000, more preferably not more than 300,000, even more preferably not more than 200,000, further even more preferably not more than 150,000, and further even more preferably not more than 100,000.

<13> The water-based pigment dispersion according to any one of the aspects <1> to <12>, wherein the pigment particles are in the form of pigment particles onto which the water-dispersible polymer is adsorbed, or pigment-containing polymer particles.

<14> The water-based pigment dispersion according to any one of the aspects <1> to <13>, wherein a volume-average particle size of the pigment particles as measured by a dynamic light scattering method is preferably not less than 40 nm, more preferably not less than 50 nm, and even more preferably not less than 60 nm, and is also preferably not more than 150 nm, more preferably not more than 140 nm, and even more preferably not more than 130 nm.

<15> The water-based pigment dispersion according to any one of the aspects <1> to <14>, wherein a mass ratio of the pigment to the water-dispersible polymer [pigment/water-dispersible polymer] is preferably not more than 80/20, more preferably not more than 75/25, and even more preferably not more than 70/30, and is also preferably not less than 50/50, more preferably not less than 60/40, and even more preferably not less than 65/35.

<16> The water-based pigment dispersion according to any one of the aspects <1> to <15>, wherein a surface tension (as measured at 20°C) of the water-based pigment dispersion is preferably not less than 30 mN/m, and more preferably not less than 35 mN/m, and is also preferably not more than 65 mN/m, and more preferably not more than 60 mN/m.

<17> The water-based pigment dispersion according to any one of the aspects <1> to <16>, wherein a 20% by mass (solid content) viscosity (as measured at 20°C) of the water-based pigment dispersion is preferably not less than 2 mPa · s, and is also preferably not more than 6 mPa · s, and more preferably not more than 5 mPa · s.

<18> A process for producing a water-based pigment dispersion for ink-jet printing, including step (a) of controlling a scattering intensity area ratio of components included in the range of from 0 to -55 mV in a normalized zeta potential distribution 4 that is determined through the aforementioned zeta potential measurement steps (i) to (iv) and any one of the aforementioned steps (v) to (vii) to not more than 5%; step (b) of controlling a scattering intensity area ratio of components included in the range of from 0 to -58 mV in the normalized zeta potential distribution 4 to not more than 10%; or step (c) of controlling a scattering intensity area ratio of components included in the range of from 0 to -60 mV in the normalized zeta potential distribution 4 to not more than 40%.

<19> A process for producing a water-based pigment dispersion for ink-jet printing, including step (a) of controlling a scattering intensity area ratio of components included in the range of from 0 to -55 mV in a normalized zeta potential distribution 4 that is determined through the aforementioned zeta potential measurement steps (i) to (iv) and step (v) to not more than 5%.

<20> A process for producing a water-based pigment dispersion for ink-jet printing, including step (b) of controlling a scattering intensity area ratio of components included in the range of from 0 to -58 mV in a normalized zeta potential distribution 4 that is determined through the aforementioned zeta potential measurement steps (i) to (iv) and step (vi) to not more than 10%.

<21> A process for producing a water-based pigment dispersion for ink-jet printing, including step (c) of controlling a scattering intensity area ratio of components included in the range of from 0 to -60 mV in a normalized zeta potential distribution 4 that is determined through the aforementioned zeta potential measurement steps (i) to (iv) and step (vii) to not more than 40%.

<22> The process for producing a water-based pigment dispersion for ink-jet printing according to any one of the aspects <18> to <21>, including at least two steps selected from the group consisting of the step (a), step (b) and step (c).

<23> The process for producing a water-based pigment dispersion according to any one of the aspects <18> to <22>, including the following production steps (1), (2) and (3):

production step (1): subjecting a mixture including water, a pigment, a water-dispersible polymer and an organic solvent having a solubility in water of less than 40% by mass as measured at 20°C to dispersing treatment until the volume-average particle size of the pigment particles is decreased to not more than 180 nm as measured by a dynamic light scattering method to obtain a pigment dispersion;

production step (2): adding water to the pigment dispersion obtained in the production step (1), followed by maintaining the resulting dispersion at a temperature of not higher than 40°C for a period of not less than 4 h and not more than 48 h; and

production step (3): removing the organic solvent from the pigment dispersion obtained in the production step (2) to obtain the water-based pigment dispersion.

<24> The process for producing a water-based pigment dispersion according to the aspect <23>, wherein a mass ratio of the organic solvent to water (organic solvent/water) in the production step (1) is not less than 0.27, and a mass ratio of the organic solvent to water (organic solvent/water) in the production step (2) is not more than 0.29.

<25> The process for producing a water-based pigment dispersion according to the aspect <23> or <24>, wherein the organic solvent is methyl ethyl ketone.

<26> The process for producing a water-based pigment dispersion according to any one of the aspects <23> to <25>, wherein the water-dispersible polymer is produced by copolymerizing the ionic group-containing monomer.

<27> The process for producing a water-based pigment dispersion according to the aspect <26>, wherein a content of a constitutional unit derived from the ionic group-containing monomer in the water-dispersible polymer is not less than 15% by mass and not more than 25% by mass.

<28> The process for producing a water-based pigment dispersion according to any one of the aspects <23> to <27>, wherein the pigment particles are in the form of pigment particles onto which the water-dispersible polymer is adsorbed, or pigment-containing polymer particles.

<29> A water-based pigment dispersion for ink-jet printing which is produced by the process according to any one of the aspects <23> to <28>, wherein the volume-average particle size of the pigment particles obtained in the production step (3) as measured by a dynamic light scattering method is not less than 40 nm and not more than 150 nm.

<30> A water-based pigment dispersion for ink-jet printing which is produced by the process according to any one of the aspects <23> to <28>, wherein the water-based pigment dispersion is used for an ink containing polyethylene glycol.

<31> The water-based pigment dispersion for ink-jet printing according to the aspect <29>, wherein a scattering intensity area ratio of components included in the range of from 0 to -60 mV in a normalized zeta potential distribution 4 that is determined through the following zeta potential measurement steps (2-i), (2-ii), (2-iii) and (2-iv) is not more than 40%:

step (2-i): measuring a zeta potential distribution 1 without applying an electric field to the particles in a measuring cell, followed by normalizing the zeta potential distribution 1 to obtain a normalized zeta potential distribution 1;

step (2-ii): measuring a zeta potential distribution 2 by applying a second electric field to the particles in the measuring cell, followed by normalizing the zeta potential distribution 2 to obtain a normalized zeta potential distribution 2;

step (2-iii): calculating a difference between the normalized zeta potential distributions 1 and 2 to obtain a normalized zeta potential distribution 3; and

step (2-iv): preparing a histogram of the normalized zeta potential distribution 3 at intervals of 1 mV and normalizing the histogram to obtain the normalized zeta potential distribution 4.

<32> The water-based pigment dispersion for ink-jet printing according to the aspect <31>, wherein a scattering intensity area ratio of components included in the range of from 0 to -58 mV in the normalized zeta potential distribution 4 that is determined through the aforementioned zeta potential measurement steps (2-i), (2-ii), (2-iii) and (2-iv) is not more than 10%.

<33> The water-based pigment dispersion for ink-jet printing according to the aspect <31>, wherein a scattering intensity area ratio of components included in the range of from 0 to -55 mV in the normalized zeta potential distribution 4 that is determined through the aforementioned zeta potential measurement steps (2-i), (2-ii), (2-iii) and (2-iv) is not more than 5%.

<34> The water-based pigment dispersion for ink-jet printing according to any one of the aspects <31> to <33>, wherein the respective zeta potential distributions are measured by a dynamic light scattering method.

<35> A use of the water-based pigment dispersion for ink-jet printing according to any one of the aspects <1> to <17> for ink-jet printing.

EXAMPLES

In the following Production Examples, Preparation Examples, Examples and Comparative Examples, the "part(s)" and "%" indicate "part(s) by mass" and "% by mass", respectively, unless otherwise specified.

Meanwhile, the weight-average molecular weight of the polymer, the solid contents of the polymer solution and the water-based pigment dispersion, the volume-average particle sizes of the pigment particles in the pigment dispersion and the water-based pigment dispersion, the surface tension and viscosity of the water-based ink, and the zeta potential distribution were measured by the following methods.

(1) Measurement of Weight-Average Molecular Weight of Polymer

The weight-average molecular weight of the polymer was measured by gel permeation chromatography [GPC apparatus: "HLC-8120GPC" available from Tosoh Corp.; column: "TSK-GEL $\alpha$-M" x 2 available from Tosoh Corp.; flow rate: 1 mL/min] using a solution prepared by dissolving phosphoric acid and lithium bromide in N,N-dimethyl formamide such that concentration of the phosphoric acid and lithium bromide in the resulting solution were 60 mmol/L and 50 mmol/L, respectively, as an eluent, and using a polystyrene whose weight-average molecular weight was previously determined in a monodispersed system as a reference standard substance.

(2) Measurement of Solid Contents of Polymer Solution and Water-Based Pigment Dispersion

Ten grams (10.0 g) of sodium sulfate dried to constant weight in a desiccator were weighed and charged into a 30 mL polypropylene vessel (40 mm$\phi$; height: 30 mm), and about 1.0 g of a sample was added to the vessel. The contents of the vessel were mixed and then accurately weighed. The resulting mixture was held in the vessel at 105°C for 2 h to remove volatile components therefrom, and further allowed to stand in a desiccator for 15 min to measure a mass thereof. The mass of the sample after removing the volatile components therefrom was defined as a mass of solid components therein. The solid content of the sample was calculated by dividing the mass of the solid components by the mass of the sample initially added.

(3) Volume-Average Particle Sizes of Pigment Particles in Pigment Dispersion and Water-Based Pigment Dispersion

The pigment dispersion obtained in the production step (1) or the water-based pigment dispersion obtained in the production step (3) was diluted with ion-exchanged water previously filtered through a 0.2 $\mu$m filter, and the volume-average particle size of the pigment particles in the obtained diluted dispersion was measured at 25°C by a dynamic light scattering method using a laser particle size analyzing system "ELS-6100" available from Otsuka Electrics Co., Ltd.

(4) Surface Tension of Water-Based Ink

Using a surface tension meter "CBVP-Z" (tradename) available from Kyowa Interface Science Co., Ltd., a platinum plate was dipped in 5 g of the water-based ink filled in a cylindrical polyethylene vessel (3.6 cm in diameter x 1.2 cm in depth) to measure a static surface tension of the water-based ink at 20°C.

(5) Viscosity of Water-Based Ink

Using an E-type viscometer "RE80" available from Toki Sangyo Co., Ltd., the viscosity of the water-based ink was measured at 20°C for 1 min by operating a standard rotor (1°34' x R24) at a rotating speed of 100 rpm.

(6) Measurement of Zeta Potential Distribution

The zeta potential distribution was measured using a zeta potential measuring apparatus "ELSZ-1000" (tradename) available from Otsuka Electrics Co., Ltd., under the following conditions. A glass cell and unit for dilution measurement were used as the measuring cell and unit, respectively. The solution to be measured was prepared as follows. That is, the water-based pigment dispersion having a solid content of 20% was diluted with a sodium hydroxide aqueous solution whose concentration was previously controlled to the range of from 1 x $10^{-2}$ to 1 x $10^{-4}$ N such that the solid content of the thus diluted water-based pigment dispersion was 0.01% by weight and had a pH of 9.5, and then the dispersion was filtered through a filter with a pore size of 0.45 $\mu$m available from Sartorius Japan K.K. The measurement of the zeta potential distribution was conducted under the following conditions.

(i) Measuring Conditions of Apparatus

- Adjustment of light quantity in base measurement: performed; Adjustment of light quantity in migration direction test: not performed
- Number of repetitions of electrophoresis measurement: 6; Adjustment of light quantity in electrophoresis measurement: performed
- Waiting time before measurement: 0; Waiting time after measurement: 0; Pinhole: 50 $\mu$m
- Optimum light quantity: 80000; Maximum light quantity: 100000; Minimum light quantity: 40000

(ii) Cell Conditions

- Measurement sequence: Type 2
- Selection of cell: Flow Cell; Sort of cell: Flow Cell; Cell constant: 70
- Central position Z axis: 6; Central position X axis: 7.11
- Correlator: Linear

(iii) Base Measurement Conditions

- Cumulative number: 100; Correlation method: TD: Time domain method

- Sampling time: 800 $\mu$s; Number of correlation channels: 512
- Modulation delay: 0.15; Modulation time: 1.024 s

(iv) Electrophoretic Migration Direction Test Conditions

- Cumulative number: 2; Correlation method: TD: Time domain method
- Migration sampling time: 800 $\mu$s; Number of correlation channels: 512
- Modulation delay: 0.15; Modulation time: 1.024 s
- Type of waveform of voltage applied: Negative
- Voltage applied: 60 V; Distance between electrodes: 50 mm
- Voltage delay: 0.2 s; Voltage applytime: 1.024 s
- Migration switching wait ratio: 0.1024; Constant current: 51

(v) Conditions of Electrophoretic Measurement 1

- Cumulative number: 100
- Cell measuring positions: 0.65/0.35/0/-0.35/-0.65; Correlation method: TD: Time domain method
- Sampling time: 800 $\mu$s; Number of correlation channels: 512
- Modulation delay: 0.15 s; Modulation time: 1.024 s
- Voltage applied: Fixed; Voltage applied: 0 V (electric field: 0 V/m, no electric field was applied)
- Distance between electrodes: 50 mm; Type of waveform of voltage applied: Auto; Constant current: 51
- Voltage delay: 0.2 s; Voltage applytime: 1.024 s
- Migration switching wait ratio: 0.1024

(vi) Conditions of Electrophoretic Measurement 2

- Cumulative number: 100
- Cell measuring positions: 0.65/0.35/0/-0.35/-0.65; Correlation method: TD
- Sampling time: 800 $\mu$s; Number of correlation channels: 512
- Modulation delay: 0.15 s; Modulation time: 1.024 s
- Voltage applied: Fixed; Voltage applied: 60 V (electric field of 1200 V/m was applied)
- Distance between electrodes: 50 mm; Type of waveform of voltage applied: Auto; Constant current: 51
- Voltage delay: 0.2 s; Voltage applytime: 1.024 s
- Migration switching wait ratio: 0.1024

(vii) Solvent Conditions

- Selection of solvent: WATER; Refractive index: 1.33; Viscosity: 0.89; Dielectric constant: 78.3

(viii) Analysis Conditions

- FFT Filter: BLACKMAN; Data Quantity: 1024; Smoothing: LOW
- Lorentzian fitting: 1 peak; Zeta potential conversion formula: Smoluchowski
- FFT Filter (base): BLACKMAN; Data Quantity (base): 1024
- Smoothing (base): LOW; Lorentzian fitting (base): 1 peak
- FFT Filter (migration direction): BLACKMAN; Data Quantity (migration direction): 1024
- Smoothing (migration direction): LOW; Lorentzian fitting (migration direction): 1 peak

(6-1) Zeta Potential Measurement Step (i): Acquisition of Normalized Zeta Potential Distribution 1

Using only the data at the cell measuring position 0 (zero) among the cell measuring positions in the measurement results of the electrophoretic measurement 1, a zeta potential distribution 1 was obtained. On the basis of the obtained measurement results, by setting the frequency of a peak top of the scattering intensity to zero, the zeta potential distribution 1 was normalized such that the peak intensity became 1, thereby obtaining a normalized zeta potential distribution 1.

(6-2) Zeta Potential Measurement Step (ii): Acquisition of Normalized Zeta Potential Distribution 2

Using the same method as described in the above step (i), a normalized zeta potential distribution 2 was obtained from the measurement results of the electrophoretic measurement 2.

(6-3) Zeta Potential Measurement Step (iii): Acquisition of Normalized Zeta Potential Distribution 3

(a) In the respective normalized zeta potential distributions 1 and 2, the values of frequency on the positive side where the normalized intensity fell within the range of from 0.02 to 1.0 were read out at intervals of 0.01.
(b) The difference between the thus read values of frequency on the positive side in the normalized zeta potential distributions 1 and 2 was obtained every intensity. Next, the values of a product of a correction value calculated from the formula: ((Voltage applied in electrophoretic measurement 2)/((Voltage applied in electrophoretic measurement 2) - (Voltage applied in electrophoretic measurement 1)) and the difference between the values of frequency on the positive side in the normalized zeta potential distributions 1 and 2 were respectively obtained.
(c) Similarly, in the respective normalized zeta potential distributions 1 and 2, the values of frequency on the negative side where the normalized intensity fell within the range of from 0.02 to 1.0 were read out at intervals of 0.01.
(d) The difference between the thus read values of frequency on the negative side in the normalized zeta potential distributions 1 and 2 was obtained every intensity. Next, the values of a product of a correction value calculated from the formula: ((Voltage applied in electrophoretic measurement 2)/((Voltage applied in electrophoretic measurement 2) - (Voltage applied in electrophoretic measurement 1)) and the difference between the values of frequency on the negative side in the normalized zeta potential distributions 1 and 2 were respectively obtained.
(e) The thus obtained differences between the values of frequency on the positive and negative sides and the intensity were plotted again on the X axis and the Y axis, respectively, thereby obtaining a normalized zeta potential distribution 3.

(6-4) Zeta Potential Measurement Step (iv): Preparation of Histogram of Normalized Zeta Potential Distribution 3

(a) The average value of the zeta potentials measured in the electrophoretic measurement 2 was converted as the value of a peak of the normalized zeta potential distribution 3, thereby obtaining a zeta potential distribution 3.
(b) The thus obtained zeta potential distribution 3 was plotted again to prepare a histogram in which the zeta potential value was plotted on the X axis, and the normalized frequency of occurrence was plotted on the Y axis, and the frequency of occurrence was integrated every zeta potential value to normalize the histogram again, thereby obtaining a normalized zeta potential distribution 4 of the particles in the water-based pigment dispersion.

(6-5) Zeta Potential Measurement Step (v): Calculation of Areas in Histogram

In the normalized zeta potential distribution 4, a region in which the zeta potential value fell in the range of from 0 to -55 mV and a region (area) interposed between a curve of the normalized zeta potential distribution 4 and a line indicating a scattering intensity of zero (0) were read out from a smaller side of an absolute value of the zeta potential to determine a scattering intensity area ratio (%) of components included in the range of from 0 to -55 mV. Similarly, a region in which the zeta potential value fell in the range of from 0 to -58 mV was read out to determine a scattering intensity area ratio (%) of components included in the range of from 0 to -58 mV, and a region in which the zeta potential value fell in the range of from 0 to -60 mV was read out to determine a scattering intensity area ratio (%) of components included in the range of from 0 to -60 mV. The results are shown in Table 2. The smaller the scattering intensity area ratio, the more excellent the properties of the water-based pigment dispersion became.

Production Example 1 (Production of Water-Dispersible Polymer)

The monomers and chain transfer agent (2-mercaptoethanol) were charged at the compositional ratio shown in the column "Initially Charged Monomer Solution" in Table 1, into a reaction vessel equipped with two dropping funnels 1 and 2 and mixed with each other therein, and then an inside atmosphere of the reaction vessel was replaced with a nitrogen gas, thereby obtaining an initially charged monomer solution.
On the other hand, the monomers, organic solvent (methyl ethyl ketone (MEK)), polymerization initiator (2,2'-azobis(2,4-dimethylvaleronitrile); "V-65" (tradename) available from Wako Pure Chemical Industries, Ltd.) and chain transfer agent were mixed with each other at the respective compositional ratios shown in the column "Dropping Monomer Solution 1" and the column "Dropping Monomer Solution 2" in Table 1 to obtain a dropping monomer solution 1 and a dropping monomer solution 2, respectively. The resulting dropping monomer solutions 1 and 2 were charged into the dropping funnels 1 and 2, respectively, and an inside atmosphere of the respective dropping funnels 1 and 2 was replaced with a nitrogen gas.

In a nitrogen atmosphere, the initially charged monomer solution in the reaction vessel was maintained at 75°C while stirring, and the dropping monomer solution 1 was gradually added dropwise to the reaction vessel over 3 h. Next, the dropping monomer solution 2 was also gradually added dropwise to the reaction vessel over 2 h.

After completion of the dropwise addition, the mixed solution in the reaction vessel was stirred at 75°C for 2 h. Then, a polymerization initiator solution prepared by dissolving 1.5 parts of the above polymerization initiator ("V-65") in 10 parts of the organic solvent (MEK) was added to the mixed solution, and the resulting reaction solution was aged at 75°C for 1 h while stirring. The above procedure including the preparation and addition of the polymerization initiator solution and the aging of the reaction solution was repeated two more times. Then, the reaction solution in the reaction vessel was maintained at 85°C for 2 h, thereby obtaining a water-dispersible polymer solution. A part of the resulting water-dispersible polymer solution was placed under reduced pressure to remove the solvent therefrom, and the weight average molecular weight of the obtained polymer was measured. The results are shown in Table 1.

TABLE 1

|  | Reaction vessel | Dropping funnel 1 | Dropping funnel 2 |
|---|---|---|---|
|  | Initially charged monomer solution | Dropping monomer solution 1 | Dropping monomer solution 2 |
| Monomer composition (active ingredient) (part(s)) |  |  |  |
| (a) Benzyl acrylate | 80 | 640 | 80 |
| (a) Styrene macromer[1] | 40 | 360 | 0 |
| (b) Methacrylic acid | 0 | 320 | 80 |
| (c) NK Ester EH-4E[2] | 60 | 480 | 60 |
| Organic solvent (part(s)) |  |  |  |
| MEK | 0 | 1200 | 490 |
| Polymerization initiator (part(s)) |  |  |  |
| V-65[3] | 0 | 16 | 4 |
| Chain transfer agent (part(s)) |  |  |  |
| 2-Mercaptoethanol | 0.6 | 4.2 | 1.2 |
| Weight-average molecular weight of water-dispersible polymer obtained | 80,000 | | |

Note *1: "AS-6S" (tradename) available from Toagosei Co., Ltd.; number-average molecular weight: 6,000; segment: styrene-acrylonitrile; toluene solution; solid content: 51% *2: 2-Ethylhexyl polyethylene glycol monomethacrylate; "EH4E" (tradename) available from Shin-Nakamura Chemical Co., Ltd.; (average molar number of addition of ethyleneoxide: 4; terminal end: 2-ethylhexyl group) *3: 2,2'-Azobis(2,4-dimethylvaleronitrile); "V-65" (tradename) available from Wako Pure Chemical Industries, Ltd.

Examples I-1 to I-8 and Comparative Examples I-1 to I-8 (Production of Water-Based Pigment Dispersions and Water-Based Inks)

(1) Production Step (1): Production of Pigment Dispersion

The water-dispersible polymer solution obtained in Production Example 1 (solution prepared by measuring an amount of a solid component of the water-dispersible polymer produced in Production Example 1 and adding MEK to the polymer to adjust a solid content of the resulting solution to 50%) was charged in the amount shown in Table 2 below into a 2 L-capacity disper ("T.K. ROBOMIX" equipped with "HOMODISPER 2.5 Model" as a stirring device; blade diameter: 40 mm; available from Primix Corporation). While stirring the solution in the disper at 1400 rpm, 93 parts of an organic solvent (MEK: solubility in water as measured at 20°C: 22%) was added thereto in the amount as shown in Table 2 below, and then ion-exchanged water and a 5 N (16.9%) sodium hydroxide aqueous solution were further added thereto in the amounts as shown in Table 2 below. The resulting reaction solution was stirred at 1400 rpm for 15 min while cooling the solution in a water bath at 0°C. After completion of the stirring, the pigment or the pigment dispersion shown in Table 2 was added to the solution, and the resulting mixture was stirred at 6000 rpm for 3 h.

The thus obtained mixture was subjected to dispersing treatment by passing the mixture through a Microfluidizer "Model M-140K" (tradename) available from Microfluidics Corporation under a pressure of 180 MPa 20 times, thereby obtaining a pigment dispersion.

Thereafter, the volume-average particle size of the pigment particles in the thus obtained pigment dispersion was measured by a dynamic light scattering method. As a result, it was confirmed that the volume-average particle size of the pigment particles was not more than 180 nm.

Details of the pigments shown in Table 2 are as follows.

- N-160: Carbon black "Nipex160" available from Evonik Degussa GmbH
- M717: Carbon black "monarch717" available from Cabot Corporation
- 6111T: Magenta pigment "CFR6111T" available from Dainichiseika Color & Chemicals Mfg. Co., Ltd.
- 6338JC: Cyan pigment "CFB6338JC" available from Dainichiseika Color & Chemicals Mfg. Co., Ltd.
- FY840T: Yellow pigment "FY840T" available from Dainichiseika Color & Chemicals Mfg. Co., Ltd.
- SDP100: Surface-treated carbon black water-based dispersion "SENSIJET BLACK SDP100" available from SENSIENT COLORS LLC
- M880: Carbon black "monarch880" available from Cabot Corporation
- M800: Carbon black "monarch800" available from Cabot Corporation
- N-180: Carbon black "Nipex180" available from Evonik Degussa GmbH
- 2BC: Magenta pigment "2BC" available from BASF
- 6337JC: Cyan pigment "CFB6337JC" available from Dainichiseika Color & Chemicals Mfg. Co., Ltd.
- FY7414: Yellow pigment "FY7414" available from Sanyo Color Works, Ltd.
- C-300: Surface-treated carbon black water-based dispersion "Cab-O-Jet 300" available from Cabot Corporation

(2) Production Step (2): Temperature Retention Step

The pigment dispersion obtained in the production step (1) was charged into a 2 L-capacity egg-plant shaped flask, and ion-exchanged water was added thereto in the predetermined amount shown in Table 2 below. The resulting mixture was maintained at a temperature of 35±1°C under a pressure of 100 kPa for 12 h.

However, in Examples I-6 and I-7 and Comparative Examples I-7 and I-8, the process was transferred to the production step (3) without any holding time in the production step (2).

(3) Production Step (3): Production of Water-Based Pigment Dispersion

Using a vacuum distillation apparatus (rotary evaporator "N-1000S" (tradename) available from Tokyo Rikakikai Co., Ltd.), the pigment dispersion obtained in the production step (2) was maintained in a warm bath adjusted to 40°C under a pressure of 0.09 MPa for 2 h to remove the organic solvent therefrom. However, in Examples I-6 and I-7 and Comparative Examples I-7 and I-8, the organic solvent removal step in the production step (3) was omitted.

Next, after adjusting the temperature of the warm bath to 62°C, the pressure was reduced to 10 kPa, and the dispersion was maintained under the pressure for 4 h to remove the organic solvent and a part of water therefrom, thereby controlling a total concentration of the pigment and the polymer in the dispersion to the range of from 23 to 25%. Then, the total concentration of the pigment and the polymer in the dispersion was measured, and ion-exchanged water was added thereto to control the total concentration of the pigment and the polymer in the dispersion to 20%.

Next, the resulting dispersion was allowed to sequentially pass through a 5 $\mu$m membrane filter and then a 1.2 $\mu$m membrane filter (both "Minisart" (tradename) available from Sartorius Japan K.K.), thereby obtaining a water-based pigment dispersion. The volume-average particle sizes of the pigment particles in the thus obtained water-based pigment dispersions are shown in Table 2.

(4) Ink Production Step: Production of Water-Based Ink

The water-based pigment dispersion obtained in the production step (2), polyethylene glycol 400 (reagent available from Wako Pure Chemical Industries, Ltd.; average molecular weight: 400), 0.5 part of a surfactant ("OLEFIN E1010" available from Nissin Chemical Industry Co., Ltd.; ethyleneoxide (10 mol) adduct of acetylene diol), 0.1 part of a mildew-proof agent ("Ploxel LV(S)" available from Arch Chemicals Japan Inc.; 1,2-benzisothiazol-3(2H)-one; active ingredient: 20%), and ion-exchanged water were added and mixed with each other in the amounts shown in Table 2 below. The resulting mixed solution was filtered through a 0.45 $\mu$m membrane filter ("Minisart" (tradename) available from Sartorius Japan K.K.), thereby obtaining a water-based ink.

The surface tension of the thus obtained water-based ink as measured at 20°C was 36 mN/m.

The water-based inks obtained in Examples I-1 to I-8 and Comparative Examples I-1 to I-8 were evaluated for the following properties.

(1) Evaluation of Ejection Durability

Using the same printer and the same printing conditions as used for the measurement of optical density in the aforementioned item (1), a solid image having a width of 200 mm and a length of 254 mm was printed on the aforementioned plain paper. The solid image printing was repeated until the optical density of the printed image was reduced by 10% relative to the optical density of an initially printed image, and the number of sheets of the plain paper printed up to the time was counted. Meanwhile, the above evaluation was conducted by replacing the print head with a new one every ink to be evaluated. The results are shown in Table 2.

In addition, when observing a heater of the print head used until the optical density was reduced by 10% using an optical microscope, black burn was confirmed on the heater.

(2) Measurement of Optical Density and Evaluation of Adaptability to Printer

A yellow ink in an intermediate tank of a thermal ink-jet printer "LPP-6010N" available from LG Electronics was refilled, and images were printed on a plain paper "Xerox4024" available from Xerox Corporation in Best Mode at a temperature of 25±1°C and a relative humidity of 30±5%.

The condition in which a print head was mounted to the above printer and the ink was filled in the print head was defined as an initial state of the printer. In the printer held in the initial state, a print head replacement button was pushed to recover the ink into the intermediate tank. Thereafter, the print head was once dismounted from the printer, and immediately mounted thereto again, and the ink was filled in the print head. The above print head replacement procedure as one cycle was repeated 1,000 times.

Next, a solid image having a width of 200 mm and a length of 254 mm was printed on the aforementioned plain paper under the same conditions as used above. The optical density (value outputted as black optical density) of the thus obtained printed images was measured at five points in total using a Macbeth densitometer "SpectroEye" (tradename) available from GretagMacbeth GmbH under the following conditions: observation viewing angle: 2°; observation light source: D50; reference white color: paper white; polarizing filter: none; density standard: ANSI-A, and an average value of the thus measured five values was calculated as an initial optical density (a). In addition, the values of a difference (variation) between the optical density obtained in the measurement of optical density in the aforementioned item (1) and the optical density (b) obtained after circulating the ink through the print head 1,000 times are shown in Table 2. Meanwhile, the printer and print head were respectively replaced with unused ones every ink to be evaluated.

It is desirable that the aforementioned variation of optical density is not more than 0.1. In the case where the optical density was reduced with the variation of not less than 0.2, clear white streaks were observed in the resulting solid image portions, and therefore the obtained printed images were considerably deteriorated in printing quality.

TABLE 2

| | Examples | | | | | | | |
|---|---|---|---|---|---|---|---|---|
| | I-1 | I-2 | I-3 | I-4 | I-5 | I-6 | I-7 | I-8 |
| Production step (1) | | | | | | | | |
| Kind of pigment | N-160 | M717 | 6111T | 6338JC | FY840T | SDP100 | SDP100 | *2 |
| Amount of pigment (part(s)) | 100 | 100 | 100 | 100 | 100 | - | - | 50 |
| Pigment dispersion | - | - | - | - | - | 714 | 714 | 357 |
| Polymer solution (50%) (part(s))*1 | 85.7 | 85.7 | 85.7 | 85.7 | 85.7 | 0 | 22.2 | 42.9 |

(continued)

| | Examples | | | | | | | |
|---|---|---|---|---|---|---|---|---|
| | I-1 | I-2 | I-3 | I-4 | I-5 | I-6 | I-7 | I-8 |
| Organic solvent (MEK) (part(s)) | 93 | 93 | 93 | 93 | 93 | 0 | 81.8 | 92.8 |
| Ion-exchanged water (part(s)) | 419.8 | 419.8 | 419.8 | 419.8 | 419.8 | 0 | 0 | 112.3 |
| 5N NaOH aqueous solution (part(s)) | 23.6 | 23.6 | 23.6 | 23.6 | 23.6 | 3.54 | 9.66 | 13.57 |
| Mass ratio (pigment/polymer) | 70/30 | 70/30 | 70/30 | 70/30 | 70/30 | 100/0 | 90/10 | 82/18 |
| Mass ratio (organic solvent/water)*3 | 0.30 | 0.30 | 0.30 | 0.30 | 0.30 | 0.00 | 0.15 | 0.30 |
| Conditions of dispersing treatment | 20 passes under 180 MPa | | | | | | | |
| Volume-average particle size of pigment particles (nm) | 120 | 95 | 110 | 100 | 150 | 112 | 105 | 108 |
| Production step (2) | | | | | | | | |
| Amount of ion-exchanged water added (part(s)) | 176 | 176 | 176 | 176 | 176 | - | - | 168 |
| Mass ratio (organic solvent/water)*3 | 0.22 | 0.22 | 0.22 | 0.22 | 0.22 | - | - | 0.22 |
| Solid content (%) | 16.1 | 16.1 | 16.1 | 16.1 | 16.1 | - | - | 14.6 |
| Production conditions | 35°C; 100 kPa; 12 h | | | | | - | - | 35°C; 100 kPa; 12 h |
| Production step (3): Conditions of removal of organic solvent | 40°C; 10 kPa; 2 h + 62°C; 15 kPa; 4 h | | | | | | | |
| Water-based pigment dispersion | | | | | | | | |
| Volume-average particle size of pigment particles (nm) | 118 | 90 | 108 | 98 | 144 | 112 | 105 | 106 |
| Scattering intensity area ratio (%) in the range of from 0 to -55 mV of zeta potential | 0% | 1% | 0% | 0% | 4% | 5% | 2% | 0% |

(continued)

| | Examples | | | | | | | |
|---|---|---|---|---|---|---|---|---|
| | I-1 | I-2 | I-3 | I-4 | I-5 | I-6 | I-7 | I-8 |
| Scattering intensity area ratio (%) in the range of from 0 to -58 mV of zeta potential | 0% | 3% | 0% | 2% | 8% | 10% | 7% | 1% |
| Scattering intensity area ratio (%) in the range of from 0 to -60 mV of zeta potential | 3% | 9% | 2% | 9% | 23% | 35% | 20% | 2% |
| Production of ink | | | | | | | | |
| Water-based pigment dispersion obtained (part(s)) | 35.7 | 35.7 | 50.0 | 28.6 | 35.7 | 35.7 | 35.7 | 35.7 |
| Concentration of pigment | 5 | 5 | 7 | 4 | 5 | 5 | 5 | 5 |
| PEG 400 (part(s)) | 17 | 17 | 13 | 23 | 17 | 23 | 21 | 19 |
| "OLEFIN E1010" (0.5) + "Ploxel LVS" (0.1) | 0.6 | 0.6 | 0.6 | 0.6 | 0.6 | 0.6 | 0.6 | 0.6 |
| Ion-exchanged water (balance in a total amount of 100 parts) | Balance | Balance | Balance | Balance | Balance | Balance | Balance | Balance |
| Evaluation | | | | | | | | |
| Ejection durability (number of sheets) *4 | 8000 | 6400 | 8400 | 6500 | 4000 | 3000 | 4800 | 7400 |
| Initial optical density (a) | 1.01 | 0.89 | 0.78 | 0.85 | 0.85 | 1.13 | 1.12 | 1.06 |
| Optical density (b) after circulating ink through print head 1,000 times | 1.00 | 0.87 | 0.78 | 0.83 | 0.8 | 1.03 | 1.04 | 1.05 |
| Variation in optical density (a - b) | 0.01 | 0.02 | 0 | 0.02 | 0.05 | 0.1 | 0.08 | 0.01 |
| | Comparative Examples | | | | | | | |
| | I-1 | I-2 | I-3 | I-4 | I-5 | I-6 | I-7 | I-8 |
| Production step (1) | | | | | | | | |
| Kind of pigment | M880 | M800 | N-180 | 2BC | 6337JC | FY7414 | c-300 | c-300 |
| Amount of pigment (part(s)) | 100 | 100 | 100 | 100 | 100 | 100 | 100 | 100 |
| Pigment dispersion | - | - | - | - | - | - | 714 | 714 |

(continued)

| | | Comparative Examples | | | | | | | |
|---|---|---|---|---|---|---|---|---|---|
| | | I-1 | I-2 | I-3 | I-4 | I-5 | I-6 | I-7 | I-8 |
| Polymer solution (50%) (part(s))*1 | | 85.7 | 85.7 | 85.7 | 85.7 | 85.7 | 85.7 | 0 | 22.2 |
| Organic solvent (MEK) (part(s)) | | 93 | 93 | 93 | 93 | 93 | 93 | 0 | 81.8 |
| Ion-exchanged water (part(s)) | | 419.8 | 419.8 | 419.8 | 419.8 | 419.8 | 419.8 | 0 | 0 |
| 5N NaOH aqueous solution (part(s)) | | 23.6 | 23.6 | 23.6 | 23.6 | 23.6 | 23.6 | 3.54 | 9.66 |
| Mass ratio (pigment/polymer) | | 70/30 | 70/30 | 70/30 | 70/30 | 70/30 | 70/30 | 100/0 | 90/10 |
| Mass ratio (organic solvent/water)*3 | | 0.30 | 0.30 | 0.30 | 0.30 | 0.30 | 0.30 | 0.00 | 0.15 |
| Conditions of dispersing treatment | 20 passes under 180 MPa | | | | | | | | |
| Volume-average particle size of pigment particles (nm) | | 105 | 100 | 120 | 140 | 120 | 115 | 110 | 105 |
| Production step (2) | | | | | | | | | |
| Amount of ion-exchanged water added (part(s)) | | 176 | 176 | 176 | 176 | 176 | 176 | - | |
| Mass ratio (organic solvent/water)*3 | | 0.22 | 0.22 | 0.22 | 0.22 | 0.22 | 0.22 | - | |
| Solid content (%) | | 16.1 | 16.1 | 16.1 | 16.1 | 16.1 | 16.1 | - | |
| Production conditions | 35°C; 100 kPa; 12 h | | | | | | | - | |
| Production step (3): Conditions of removal of organic solvent | 40°C; 10 kPa; 2 h + 62°C; 15 kPa; 4 h | | | | | | | | |
| Water-based pigment dispersion | | | | | | | | | |
| Volume-average particle size of pigment particles (nm) | | 110 | 108 | 126 | 145 | 130 | 121 | 110 | 105 |
| Scattering intensity area ratio (%) in the range of from 0 to -55 mV of zeta potential | | 18% | 14% | 11% | 33% | 28% | 30% | 22% | 16% |

(continued)

| | Comparative Examples | | | | | | | |
|---|---|---|---|---|---|---|---|---|
| | I-1 | I-2 | I-3 | I-4 | I-5 | I-6 | I-7 | I-8 |
| Scattering intensity area ratio (%) in the range of from 0 to -58 mV of zeta potential | 33% | 25% | 21% | 45% | 42% | 42% | 34% | 27% |
| Scattering intensity area ratio (%) in the range of from 0 to -60 mV of zeta potential | 58% | 45% | 42% | 65% | 59% | 55% | 48% | 51% |
| Production of ink | | | | | | | | |
| Water-based pigment dispersion obtained (part(s)) | 35.7 | 35.7 | 35.7 | 50.0 | 28.6 | 35.7 | 35.7 | 35.7 |
| Concentration of pigment | 5 | 5 | 5 | 7 | 4 | 5 | 5 | 5 |
| PEG 400 (part(s)) | 17 | 17 | 17 | 13 | 23 | 17 | 23 | 21 |
| "OLEFIN E1010" (0.5) + "Ploxel LVS" (0.1) | 0.6 | 0.6 | 0.6 | 0.6 | 0.6 | 0.6 | 0.6 | 0.6 |
| Ion-exchanged water (balance in a total amount of 100 parts) | Balance | Balance | Balance | Balance | Balance | Balance | Balance | Balance |
| Evaluation | | | | | | | | |
| Ejection durability (number of sheets) *4 | 20 | 500 | 800 | 10 | 20 | 50 | 120 | 90 |
| Initial optical density (a) | 0.95 | 0.87 | 0.97 | 0.73 | 0.83 | 0.83 | 1.1 | 1.07 |
| Optical density (b) after circulating ink through print head 1,000 times | 0.37 | 0.57 | 0.77 | 0.2 | 0.18 | 0.13 | 0.62 | 0.58 |
| Variation in optical density (a - b) | 0.58 | 0.3 | 0.2 | 0.53 | 0.65 | 0.7 | 0.48 | 0.49 |
| Note *1: MEK solution of water-dispersible polymer obtained in Production Example 1 (solid content: 50%) *2: "N-160"/"SDP100" *3: Mass ratio of organic solvent to water (organic solvent/water) in a whole amount of mixture present in reaction system *4: Number of sheets of paper printed until optical density was reduced by 10% relative to initial value | | | | | | | | |

From Table 2, it was confirmed that the water-based inks obtained in Examples I-1 to I-8 were excellent in ejection durability and therefore could be prevented from suffering from deterioration in optical density even when used for printing over a long period of time, as compared to the water-based inks obtained in Comparative Examples I-1 to I-8.

The amount of a solid component of the water-dispersible polymer solution obtained in Production Example 1 was measured, and MEK was added to the water-dispersible polymer to adjust a solid content of the resulting solution to 50%, and the resulting MEK solution was used in the following Examples and Comparative Examples.

Examples II-1 to II-12 and Comparative Examples II-1 to II-4 (Production of Water-Based Pigment Dispersions and Water-Based Inks)

(1) Production Step (1)

The water-dispersible polymer solution obtained in Production Example 1 was charged in an amount of 85.7 parts into a 2 L-capacity disper ("T.K. ROBOMIX" equipped with "HOMODISPER 2.5 Model" as a stirring device; blade diameter: 40 mm; available from Primix Corporation). While stirring the solution in the disper at 1400 rpm, 93 parts of an organic solvent (MEK: solubility in water as measured at 20°C: 22%) was added thereto, and then a predetermined amount of ion-exchanged water, 23.6 parts of a 5 N (16.9%) sodium hydroxide aqueous solution and a predetermined amount of a 25% ammonia aqueous solution were further added thereto. The resulting reaction solution was stirred at 1400 rpm for 15 min while cooling the solution in a water bath at 0°C. After completion of the stirring, 100 parts of a pigment (carbon black "Nipex160" available from Evonik Degussa GmbH) was added to the solution, and the resulting mixture was stirred at 6000 rpm for 3 h.
The thus obtained mixture was subjected to dispersing treatment by passing the mixture through a Microfluidizer "Model M-140K" (tradename) available from Microfluidics Corporation under a pressure of 180 MPa 20 times, thereby obtaining a pigment dispersion.
Thereafter, the volume-average particle size of the pigment particles in the thus obtained pigment dispersion was measured by a dynamic light scattering method. As a result, it was confirmed that the volume-average particle size of the pigment particles was not more than 180 nm.

(2) Production Step (2)

The pigment dispersion obtained in the production step (1) was charged into a 2 L-capacity egg-plant shaped flask, and ion-exchanged water was added thereto in the predetermined amount shown in Table 3 below. The resulting mixture was maintained at the temperature shown in Table 3 ±1°C for a predetermined period of time.
Meanwhile, in Example II-7, the pressure of the reaction system was reduced to 10 kPa within a pressure-reducible closed chamber, and the chamber was hermetically sealed and held at 35°C for 4 h. In the respective Examples and Comparative Examples except for Example II-7, the pressure of the reaction system was maintained under a normal pressure (100 kPa).
In addition, in Comparative Example 1, the production step (3) was carried out immediately after the production step (1) without proceeding via the production step (2).

(3) Production Step (3)

Using a vacuum distillation apparatus (rotary evaporator "N-1000S" (tradename) available from Tokyo Rikakikai Co., Ltd.), the pigment dispersion obtained in the production step (2) was maintained in a warm bath adjusted to 40°C under a pressure of 10 kPa for 2 h to remove the organic solvent therefrom. Furthermore, after adjusting the temperature of the warm bath to 62°C, the pressure was raised to 15 kPa, and the dispersion was maintained under the pressure for 4 h to remove the organic solvent and a part of water therefrom, thereby controlling a total concentration of the pigment and the polymer in the dispersion to the range of from 23 to 25%. Then, the total concentration of the pigment and the polymer in the dispersion was measured, and ion-exchanged water was added thereto to control the total concentration of the pigment and the polymer in the dispersion to 20%.
Next, the resulting dispersion was allowed to sequentially pass through a 5 μm membrane filter and then a 1.2 μm membrane filter (both "Minisart" (tradename) available from Sartorius Japan K.K.), thereby obtaining a water-based pigment dispersion. The volume-average particle sizes of the pigment particles in the thus obtained water-based pigment dispersions are shown in Table 3.

(4) Ink Production Step

As shown in Table 3, a solvent set 1 including 5 parts of glycerol (reagent available from Wako Pure Chemical Industries, Ltd.), 5 parts of triethylene glycol (reagent available from Wako Pure Chemical Industries, Ltd.) and 7 parts of trimethylol propane (reagent available from Wako Pure Chemical Industries, Ltd.) in Examples II-1 to II-11 and Comparative Examples II-1 to II-4, or a solvent set 2 including 17 parts of polyethylene glycol 400 (reagent available from Wako Pure Chemical Industries, Ltd.; average molecular weight: 400), 0.5 part of a surfactant ("OLEFIN E1010" available from Nissin Chemical Industry Co., Ltd.; ethyleneoxide (10 mol) adduct of acetylene diol), 0.1 part of a mildew-proof agent ("Ploxel LV(S)" available from Arch Chemicals Japan Inc.; 1,2-benzisothiazol-3(2H)-one; active ingredient: 20%) and ion-exchanged water in Example II-12, was added and mixed into 35.7 parts of the water-based pigment dispersion obtained in the production step (2). The resulting mixed solution was filtered through a 0.45 μm membrane filter ("Minisart" (tradename) available from Sartorius Japan K.K.), thereby obtaining a water-based ink. The surface tension of the thus obtained water-based ink as measured at 20°C was 36 mN/m.

The water-based inks obtained in Examples II-1 to II-12 and Comparative Examples II-1 to II-4 were evaluated for the following properties.

(1) Measurement of Optical Density

A yellow ink in an intermediate tank of a thermal ink-jet printer "LPP-6010N" available from LG Electronics was refilled, and images were printed on a plain paper "Xerox4024" available from Xerox Corporation in Best Mode at a temperature of $25\pm1$°C and a relative humidity of $30\pm5$%. The optical density (value outputted as black optical density) of the thus obtained printed images was measured at five points in total using a Macbeth densitometer "SpectroEye" (tradename) available from GretagMacbeth GmbH under the following conditions: observation viewing angle: 2°; observation light source: D50; reference white color: paper white; polarizing filter: none; density standard: ANSI-A, and an average value of the thus measured five values was calculated as an optical density. The results are shown in Table 3.

In the case where the optical density is not less than 0.90, sufficient printing quality is attained when printed on a plain paper, and the optical density is particularly preferably not less than 0.95.

(2) Evaluation of Ejection Durability

Using the same printer and the same printing conditions as used for the measurement of optical density in the aforementioned item (1), a solid image having a width of 200 mm and a length of 254 mm was printed on the aforementioned plain paper. The solid image printing was repeated until the optical density of the printed image was reduced by 10% relative to the optical density of an initially printed image, and the number of sheets of the plain paper printed up to the time was counted. Meanwhile, the above evaluation was conducted by replacing the print head with a new one every ink to be evaluated. The results are shown in Table 3.

In addition, when observing a heater of the print head used until the optical density was reduced by 10% using an optical microscope, black burn on the heater was confirmed.

TABLE 3

| | Examples | | | | | | | |
|---|---|---|---|---|---|---|---|---|
| | II-1 | II-2 | II-3 | II-4 | II-5 | II-6 | II-7 | II-8 |
| Step (1) | | | | | | | | |
| Pigment (carbon black) (part(s)) | 100 | 100 | 100 | 100 | 100 | 100 | 100 | 100 |
| Polymer solution (50%) (part(s))*1 | 85.7 | 85.7 | 85.7 | 85.7 | 85.7 | 85.7 | 85.7 | 85.7 |
| Organic solvent (MEK) (part(s)) | 93 | 93 | 93 | 93 | 93 | 93 | 93 | 93 |
| Amount of ion-exchanged water added (part(s)) | 419.8 | 419.8 | 419.8 | 419.8 | 419.8 | 419.8 | 419.8 | 428.1 |
| 5N NaOH aqueous solution (part(s)) | 23.6 | 23.6 | 23.6 | 23.6 | 23.6 | 23.6 | 23.6 | 23.6 |
| 25% Ammonia aqueous solution (part(s)) | 20.3 | 20.3 | 20.3 | 20.3 | 20.3 | 20.3 | 20.3 | 6.8 |
| Degree of neutralization with ammonia (mol%) | 300 | 300 | 300 | 300 | 300 | 300 | 300 | 100 |
| Mass ratio (pigment/polymer) | 70/30 | 70/30 | 70/30 | 70/30 | 70/30 | 70/30 | 70/30 | 70/30 |
| Mass ratio (organic solvent/water)*2 | 0.30 | 0.30 | 0.30 | 0.30 | 0.30 | 0.30 | 0.30 | 0.30 |
| Conditions of dispersing treatment | 20 passes under 180 MPa | | | | | | | |
| Volume-average particle size of pigment particles (nm) | 120 | 120 | 120 | 120 | 120 | 120 | 120 | 118 |

(continued)

| Step (2) | | | | | | | | |
|---|---|---|---|---|---|---|---|---|
| Amount of ion-exchanged water added (part(s)) | 176 | 176 | 176 | 176 | 176 | 176 | 176 | 168 |
| Mass ratio (organic solvent/water)*2 | 0.22 | 0.22 | 0.22 | 0.22 | 0.22 | 0.22 | 0.22 | 0.22 |
| Solid content (%) | 16.1 | 16.2 | 16.3 | 16.4 | 16.5 | 16.6 | 16.7 | 16.3 |
| Holding temperature (°C) | 35 | 35 | 35 | 35 | 35 | 35 | 35 | 35 |
| Holding time (h) | 4 | 6 | 12 | 24 | 36 | 48 | 4 | 6 |
| Pressure | 100 kPa | 100 kPa | 100 kPa | 100 kPa | 100 kPa | 100 kPa | 10 kPa | 100 kPa |
| Production step (3) | | | | | | | | |
| Conditions of removal of organic solvent | 40°C; 10 kPa; 2 h + 62°C; 15 kPa; 4 h | | | | | | | |
| Volume-average particle size of pigment particles (nm) | 116 | 116 | 116 | 116 | 116 | 116 | 116 | 120 |
| Subsequent to step (3) | | | | | | | | |
| Scattering intensity area ratio (%) in the range of from 0 to -55 mV of zeta potential | 2% | 0% | 0% | 0% | 1% | 2% | 0% | 0% |
| Scattering intensity area ratio (%) in the range of from 0 to -58 mV of zeta potential | 7% | 3% | 1% | 2% | 4% | 5% | 3% | 2% |
| Scattering intensity area ratio (%) in the range of from 0 to -60 mV of zeta potential | 32% | 8% | 3% | 5% | 9% | 20% | 9% | 6% |
| Production of ink | | | | | | | | |
| Water-based pigment dispersion obtained (part(s)) | 35.7 | 35.7 | 35.7 | 35.7 | 35.7 | 35.7 | 35.7 | 35.7 |
| Glycerol, surfactant, etc. (part(s))*3 | 17.6 | 17.6 | 17.6 | 17.6 | 17.6 | 17.6 | 17.6 | 17.6 |
| Polyethylene glycol 400. surfactant, etc. (part(s))*4 | 0 | 0 | 0 | 0 | 0 | 0 | 0 | 0 |
| Amount of ion-exchanged water added (part(s)) | 46.7 | 46.7 | 46.7 | 46.7 | 46.7 | 46.7 | 46.7 | 46.7 |
| Evaluation | | | | | | | | |
| Optical density | 0.94 | 0.95 | 0.96 | 0.95 | 0.94 | 0.94 | 0.94 | 0.96 |
| Election durability (number of sheets) *5 | 2800 | 5600 | 6720 | 6720 | 5600 | 4480 | 5600 | 6720 |
| | Examples | | | | Comparative Examples | | | |
| | II-9 | II-10 | II-11 | II-12 | II-1 | II-2 | II-3 | II-4 |
| Step (1) | | | | | | | | |
| Pigment (carbon black) (part(s)) | 100 | 100 | 100 | 100 | 100 | 100 | 100 | 100 |
| Polymer solution (50%) (part(s))*1 | 85.7 | 85.7 | 85.7 | 85.7 | 85.7 | 85.7 | 85.7 | 85.7 |
| Organic solvent (MEK) (part(s)) | 93 | 93 | 93 | 93 | 93 | 93 | 93 | 93 |

(continued)

|  | Examples | | | | Comparative Examples | | | |
|---|---|---|---|---|---|---|---|---|
|  | II-9 | II-10 | II-11 | II-12 | II-1 | II-2 | II-3 | II-4 |
| Step (1) | | | | | | | | |
| Amount of ion-exchanged water added (part(s)) | 432.2 | 419.8 | 419.8 | 432.2 | 419.8 | 419.8 | 419.8 | 419.8 |
| 5N NaOH aqueous solution (part(s)) | 23.6 | 23.6 | 23.6 | 23.6 | 23.6 | 23.6 | 23.6 | 23.6 |
| 25% Ammonia aqueous solution (part(s)) | 0 | 20.3 | 20.3 | 0 | 20.3 | 20.3 | 20.3 | 20.3 |
| Degree of neutralization with ammonia (mol%) | 0 | 300 | 300 | 0 | 300 | 300 | 300 | 300 |
| Mass ratio (pigment/polymer) | 70/30 | 70/30 | 70/30 | 70/30 | 70/30 | 70/30 | 70/30 | 70/30 |
| Mass ratio (organic solvent/water)*2 | 0.30 | 0.30 | 0.30 | 0.30 | 0.30 | 0.30 | 0.30 | 0.30 |
| Conditions of dispersing treatment | 20 passes under 180 MPa | | | | | | | |
| Volume-average particle size of pigment particles (nm) | 117 | 120 | 120 | 117 | 120 | 120 | 120 | 120 |
| Step (2) | | | | | | | | |
| Amount of ion-exchanged water added (part(s)) | 164 | 103 | 176 | 164 | | 176 | 176 | 0 |
| Mass ratio (organic solvent/water)*2 | 0.22 | 0.25 | 0.22 | 0.22 | - | 0.22 | 0.22 | 0.30 |
| Solid content (%) | 16.4 | 17.5 | 16.1 | 16.4 | - | 16.1 | 16.2 | 16.3 |
| Holding temperature (°C) | 35 | 35 | 15 | 35 | - | 60 | 35 | 35 |
| Holding time (h) | 6 | 6 | 6 | 6 | - | 4 | 2 | 6 |
| Pressure | 100 kPa | 100 kPa | 100 kPa | 100 kPa | - | 100 kPa | 100 kPa | 100 kPa |
| Production step (3) | | | | | | | | |
| Conditions of removal of organic solvent | 40°C; 10 kPa; 2 h + 62°C; 15 kPa; 4 h | | | | | | | |
| Volume-average particle size of pigment particles (nm) | 125 | 116 | 116 | 125 | 116 | 116 | 116 | 116 |
| Subsequent to step (3) | | | | | | | | |
| Scattering intensity area ratio (%) in the range of from 0 to -55 mV of zeta potential | 0% | 2% | 0% | 0% | 12% | 19% | 8% | 16% |
| Scattering intensity area ratio (%) in the range of from 0 to -58 mV of zeta potential | 0% | 8% | 2% | 0% | 25% | 32% | 20% | 27% |
| Scattering intensity area ratio (%) in the range of from 0 to -60 mV of zeta potential | 3% | 35% | 4% | 3% | 48% | 55% | 42% | 51% |
| Production of ink | | | | | | | | |
| Water-based pigment dispersion obtained (part(s)) | 35.7 | 35.7 | 35.7 | 35.7 | 35.7 | 35.7 | 35.7 | 35.7 |
| Glycerol, surfactant, etc. (part(s))*3 | 17.6 | 17.6 | 17.6 | 0 | 17.6 | 17.6 | 17.6 | 17.6 |

(continued)

| Production of ink | | | | | | | | |
|---|---|---|---|---|---|---|---|---|
| Polyethylene glycol 400, surfactant, etc. (part(s))*4 | 0 | 0 | 0 | 17.6 | 0 | 0 | 0 | 0 |
| Amount of ion-exchanged water added (part(s)) | 46.7 | 46.7 | 46.7 | 47.3 | 46.7 | 46.7 | 46.7 | 46.7 |
| Evaluation | | | | | | | | |
| Optical density | 0.96 | 0.94 | 0.96 | 1.01 | 0.87 | 0.88 | 0.89 | 0.86 |
| Ejection durability (number of sheets) *5 | 8000 | 2800 | 6720 | 8000 | 560 | 56 | 840 | 112 |

Note *1: MEK solution of water-dispersible polymer obtained in Production Example 1 (solid content: 50%)
*2: Mass ratio of organic solvent to water (organic solvent/water) in a whole amount of mixture present in reaction system
*3: Total mass (part(s)) of glycerol, triethylene glycol, trimethylol propane, surfactant and mildew-proof agent
*4: Total mass (part(s)) of polyethylene glycol 400, surfactant and mildew-proof agent
*5: Number of sheets of paper printed until optical density was reduced by 10% relative to initial value

From Table 3, it was confirmed that the water-based inks obtained in Examples II-1 to II-12 were excellent in ejection durability and had a high optical density as compared to the water-based inks obtained in Comparative Examples II-1 to II-4.

INDUSTRIAL APPLICABILITY

In accordance with the present invention, it is possible to provide a water-based pigment dispersion for ink-jet printing which is excellent in ejection durability and can be prevented from suffering from deterioration in optical density even when used for printing over a long period of time, and a process for producing the water-based dispersion.
In addition, in accordance with the present invention, it is possible to provide a process for producing a water-based pigment dispersion for ink-jet printing which is excellent in ejection durability and capable of producing an ink having a high optical density, and a water-based pigment dispersion for ink-jet printing which is produced by the process.

Claims

1.    A water-based pigment dispersion for ink-jet printing comprising pigment particles and water, in which a scattering intensity area ratio of components included in the range of from 0 to -55 mV in a normalized zeta potential distribution 4 that is determined through the following zeta potential measurement steps (i) to (iv) and step (v) is not more than 5% or

in which a scattering intensity area ratio of components included in the range of from 0 to -58 mV in a normalized zeta potential distribution 4 that is determined through the following zeta potential measurement steps (i) to (iv) and step (vi) is not more than 10% or
in which a scattering intensity area ratio of components included in the range of from 0 to -60 mV in a normalized zeta potential distribution 4 that is determined through the following zeta potential measurement steps (i) to (iv) and step (vii) is not more than 40%:

step (i): measuring a zeta potential distribution 1 without applying an electric field to the particles in a measuring cell, followed by normalizing the zeta potential distribution 1 to obtain a normalized zeta potential distribution 1;
step (ii): measuring a zeta potential distribution 2 by applying an electric field of 1200 V/m to the particles in the measuring cell, followed by normalizing the zeta potential distribution 2 to obtain a normalized zeta potential distribution 2;
step (iii): calculating a difference between the normalized zeta potential distributions 1 and 2 to obtain a normalized zeta potential distribution 3;
step (iv): preparing a histogram of the normalized zeta potential distribution 3 at intervals of 1 mV and normalizing the histogram to obtain the normalized zeta potential distribution 4;

step (v): reading out a region (area) in the range of from 0 to -55 mV in the normalized zeta potential distribution 4 and a region (area) interposed between a curve of the normalized zeta potential distribution 4 and a line indicating a scattering intensity of zero (0) to determine the scattering intensity area ratio (%) of the components included in the range of from 0 to -55 mV ;

step (vi): reading out a region (area) in the range of from 0 to -58 mV in the normalized zeta potential distribution 4 and a region (area) interposed between a curve of the normalized zeta potential distribution 4 and a line indicating a scattering intensity of zero (0) to determine the scattering intensity area ratio (%) of the components included in the range of from 0 to -58mV; and

step (vii): reading out a region (area) in the range of from 0 to -60 mV in the normalized zeta potential distribution 4 and a region (area) interposed between a curve of the normalized zeta potential distribution 4 and a line indicating a scattering intensity of zero (0) to determine the scattering intensity area ratio (%) of the components included in the range of from 0 to -60mV.

2. The water-based pigment dispersion for ink-jet printing according to claim1, wherein the respective zeta potential distributions are measured by a dynamic light scattering method.

3. The water-based pigment dispersion for ink-jet printing according to claim 1 or 2, wherein a volume-average particle size of the pigment particles is not less than 40 nm and not more than 150 nm.

4. The water-based pigment dispersion for ink-jet printing according to any one of claims 1 to 3, wherein the pigment particles are particles of at least one pigment selected from the group consisting of a self-dispersible pigment and a pigment dispersed with a water-dispersible polymer.

5. The water-based pigment dispersion for ink-jet printing according to claim 4, wherein a content of the pigment in the water-based pigment dispersion is not less than 5% by mass and not more than 30% by mass.

6. The water-based pigment dispersion for ink-jet printing according to any one of claims 1 to 5, wherein the water-based pigment dispersion is used for an ink comprising polyethylene glycol.

7. A process for producing the water-based pigment dispersion for ink-jet printing comprising the following production steps (1), (2) and (3) and controlling the scattering intensity area ratio of the components included in the range of from 0 to -55 mV in the normalized zeta potential distribution 4 that is determined through the zeta potential measurement steps (i) to (iv) and step (v) as claimed in claim 1 to not more than 5%:

production step (1): subjecting a mixture comprising water, the pigment, the water-dispersible polymer and an organic solvent having a solubility in water of less than 40% by mass as measured at 20°C to dispersing treatment until the volume-average particle size of the pigment particles is decreased to not more than 180 nm as measured by a dynamic light scattering method to obtain a pigment dispersion;

production step (2): adding water to the pigment dispersion obtained in the production step (1), followed by maintaining the resulting dispersion in a sealed condition under reduced pressure, at a temperature of not higher than 40°C for a period of not less than 4 h and not more than 48 h; and

production step (3): removing the organic solvent from the pigment dispersion obtained in the production step (2) using an apparatus for removing the organic solvent to obtain the water-based pigment dispersion.

8. The process for producing the water-based pigment dispersion according to claim 7, wherein a mass ratio of the organic solvent to water (organic solvent/water) in the production step (1) is not less than 0.27, and a mass ratio of the organic solvent to water (organic solvent/water) in the production step (2) is not more than 0.29.

9. The process for producing the water-based pigment dispersion according to claim 7 or 8, wherein the organic solvent is methyl ethyl ketone.

10. The process for producing the water-based pigment dispersion according to any one of claims 7 to 9, wherein the water-dispersible polymer is in the form of a copolymer prepared by copolymerizing an ionic group-containing monomer.

11. The process for producing the water-based pigment dispersion according to claim 10, wherein a content of a constitutional unit derived from the ionic group-containing monomer in the water-dispersible polymer is not less than 15% by mass and not more than 25% by mass.

**12.** The process for producing the water-based pigment dispersion according to any one of claims 7 to 11, wherein the pigment particles are in the form of pigment particles onto which the water-dispersible polymer is adsorbed, or pigment-containing polymer particles.

**13.** A use of the water-based pigment dispersion for ink-jet printing according to any one of claims 1 to 7, for ink-jet printing.


**Patentansprüche**

**1.** Wasserbasierte Pigmentdispersion für Tintenstrahldruck, enthaltend Pigmentteilchen und Wasser, worin ein Streuintensitätsflächenverhältnis von Komponenten, die in dem Bereich von 0 bis -55 mV in einer normalisierten Zetapotentialverteilung 4, die durch die folgenden Zetapotentialmessschritte (i) bis (iv) und Schritt (v) bestimmt wird, nicht mehr als 5 % ist oder
worin ein Streuintensitätsflächenverhältnis von Komponenten, die in dem Bereich von 0 bis -58 mV in einer normalisierten Zetapotentialverteilung 4 enthalten sind, die durch die folgenden Zetapotentialmessschritte (i) bis (iv) und Schritt (vi) bestimmt wird, nicht mehr als 10 % ist oder
worin ein Streuintensitätsflächenverhältnis von Komponenten, die in dem Bereich von 0 bis -60 mV in einer normalisierten Zetapotentialverteilung 4 enthalten sind, die durch die folgenden Zetapotentialmessschritte (i) bis (iv) und Schritt (vii) bestimmt wird, nicht mehr als 40 % ist:

Schritt (i): Messung einer Zetapotentialverteilung 1 ohne Auferlegung eines elektrischen Felds auf die Teilchen in einer Messzelle, mit anschließendem Normalisieren der Zetapotentialverteilung 1, unter Erhalt einer normalisierten Zetapotentialverteilung 1,
Schritt (ii): Messung einer Zetapotentialverteilung 2 durch Auferlegung eines elektrischen Feldes von 1.200 V/m auf die Teilchen in der Messzelle, mit anschließendem Normalisieren der Zetapotentialverteilung 2, unter Erhalt einer normalisierten Zetapotentialverteilung 2,
Schritt (iii): Berechnen eines Unterschiedes zwischen den normalisierten Zetapotentialverteilungen 1 und 2, unter Erhalt einer normalisierten Zetapotentialverteilung 3,
Schritt (iv): Herstellung eines Histogramms der normalisierten Zetapotentialverteilung 3 bei Intervallen von 1 mV und Normalisieren des Histogramms, unter Erhalt der normalisierten Zetapotentialverteilung 4,
Schritt (v): Auslesen eines Bereiches (Fläche) im Bereich von 0 bis -55 mV in der normalisierten Zetapotentialverteilung 4 und eines Bereiches (Fläche), der zwischen einer Kurve der normalisierten Zetapotentialverteilung 4 und einer Linie angeordnet ist, die eine Streuintensität von Null (0) anzeigt, zum Bestimmen des Streuintensitätsflächenverhältnisses (%) der Komponenten, die im Bereich von 0 bis -55 mV enthalten sind,
Schritt (vi): Auslesen eines Bereiches (Fläche) im Bereich von 0 bis -58 mV in der normalisierten Zetapotentialverteilung 4 und eines Bereiches (Fläche), der zwischen einer Kurve der normalisierten Zetapotentialverteilung 4 und einer Linie angeordnet ist, die eine Streuintensität von Null (0) anzeigt, zum Bestimmen des Streuintensitätsflächenverhältnisses (%) der Komponenten, die im Bereich von 0 bis -58 mV enthalten sind, und
Schritt (vii): Auslesen eines Bereiches (Fläche) im Bereich von 0 bis -60 mV in der normalisierten Zetapotentialverteilung 4 und eines Bereiches (Fläche), der zwischen einer Kurve der normalisierten Zetapotentialverteilung 4 und einer Linie angeordnet ist, die eine Streuintensität von Null (0) anzeigt, zum Bestimmen des Streuintensitätsflächenverhältnisses (%) der Komponenten, die im Bereich von 0 bis -60 mV enthalten sind.

**2.** Wasserbasierte Pigmentdispersion für den Tintenstrahldruck gemäß Anspruch 1, worin die jeweiligen Zetapotentialverteilungen durch ein dynamisches Lichtstreuverfahren gemessen sind.

**3.** Wasserbasierte Pigmentdispersion für den Tintenstrahldruck gemäß Anspruch 1 oder 2, worin eine volumengemittelte Teilchengröße der Pigmentteilchen nicht weniger als 40 nm und nicht mehr als 150 nm ist.

**4.** Wasserbasierte Pigmentdispersion für den Tintenstrahldruck gemäß einem der Ansprüche 1 bis 3, worin die Pigmentteilchen Teilchen von zumindest einem Pigment sind, ausgewählt aus der Gruppe, bestehend aus einem selbstdispergierbaren Pigment und einem Pigment, das mit einem wasserdispergierbaren Polymer dispergiert ist.

**5.** Wasserbasierte Pigmentdispersion für den Tintenstrahldruck gemäß Anspruch 4, worin ein Gehalt des Pigmentes in der wasserbasierten Pigmentdispersion nicht weniger als 5 Masse-% und nicht mehr als 30 Masse-% ist.

**6.** Wasserbasierte Pigmentdispersion für den Tintenstrahldruck gemäß einem der Ansprüche 1 bis 5, worin die wasserbasierte Pigmentdispersion für eine Tinte verwendet wird, die Polyethylenglykol enthält.

**7.** Verfahren zur Erzeugung der wasserbasierten Pigmentdispersion für den Tintenstrahldruck, enthaltend die folgenden Produktionsschritte (1), (2) und (3) und Steuern des Streuintensitätsflächenverhältnisses der Komponenten, die in dem Bereich von 0 bis -55 mV enthalten sind, in der normalisierten Zetapotentialverteilung 4, die bestimmt wird durch die Zetapotentialmessschritte (i) bis (iv) und Schritt (v) wie in Anspruch 1 beansprucht, auf nicht mehr als 5 %,
Produktionsschritt (1): Durchführen einer Dispergierbehandlung mit einer Mischung, enthaltend Wasser, das Pigment, das wasserdispergierbare Polymer und ein organisches Lösungsmittel mit einer Löslichkeit im Wasser von weniger als 40 Masse-%, gemessen bei 20°C, bis die volumengemittelte Teilchengröße der Pigmentteilchen auf nicht mehr als 180 nm erhöht ist, gemessen durch ein dynamisches Lichtstreuverfahren, unter Erhalt einer Pigmentdispersion,
Produktionsschritt (2): Zugabe von Wasser zu der Pigmentdispersion, erhalten im Produktionsschritt (1), mit anschließendem Aufrechterhalten der resultierenden Dispersion in einem abgedichteten Zustand unter vermindertem Druck bei einer Temperatur von nicht mehr als 40°C für eine Periode von nicht weniger als 4 h und nicht mehr als 48 h und
Produktionsschritt (3): Entfernung des organischen Lösungsmittels von der Pigmentdispersion, erhalten im Produktionsschritt (2) unter Verwendung einer Anlage zur Entfernung des organischen Lösungsmittels, unter Erhalt der wasserbasierten Pigmentdispersion.

**8.** Verfahren zur Erzeugung der wasserbasierten Pigmentdispersion gemäß Anspruch 7, worin ein Massenverhältnis des organischen Lösungsmittels zu Wasser (organisches Lösungsmittel/Wasser) im Produktionsschritt (1) nicht weniger als 0,27 ist und ein Massenverhältnis des organischen Lösungsmittels zu Wasser (organisches Lösungsmittel/Wasser) im Produktionsschritt (2) nicht mehr als 0,29 ist.

**9.** Verfahren zur Erzeugung der wasserbasierten Pigmentdispersion gemäß Anspruch 7 oder 8, worin das organische Lösungsmittel Methylethylketon ist.

**10.** Verfahren zur Erzeugung der wasserbasierten Pigmentdispersion gemäß einem der Ansprüche 7 bis 9, worin das wasserdispergierbare Polymer in der Form eines Copolymers vorliegt, hergestellt durch Copolymerisieren eines Monomers, das eine ionische Gruppe enthält.

**11.** Verfahren zur Erzeugung der wasserbasierten Pigmentdispersion gemäß Anspruch 10, worin ein Gehalt einer Bestandteilseinheit, die von dem Monomer, das eine ionische Gruppe enthält, stammt, in dem wasserdispergierbaren Polymer nicht weniger als 15 Masse-% und nicht mehr als 25 Masse-% ist.

**12.** Verfahren zur Erzeugung der wasserbasierten Pigmentdispersion gemäß einem der Ansprüche 7 bis 11, worin die Pigmentteilchen in der Form von Pigmentteilchen, auf denen das wasserdispergierbare Polymer adsorbiert ist, oder Pigment-haltigen Polymerteilchen vorliegen.

**13.** Verwendung der wasserbasierten Pigmentdispersion für den Tintenstrahldruck gemäß einem der Ansprüche 1 bis 7 für den Tintenstrahldruck.

**Revendications**

**1.** Dispersion de pigment à base d'eau pour impression par jet d'encre comprenant des particules de pigment et de l'eau, dans laquelle une proportion de surface d'intensité de diffusion de composants inclus dans la plage de 0 à -55 mV dans une distribution 4 de potentiel zêta normalisée qui est déterminée par les étapes (i) à (iv) et l'étape (v) de mesure de potentiel zêta suivantes n'est pas supérieur à 5 % ou
dans laquelle une proportion de surface d'intensité de diffusion de composants inclus dans la plage de 0 à -58 mV dans une distribution 4 de potentiel zêta normalisée qui est déterminée par les étapes (i) à (iv) et l'étape (vi) de mesure de potentiel zêta suivantes n'est pas supérieure à 10 % ou
dans laquelle une proportion de surface d'intensité de diffusion de composants inclus dans la plage de 0 à -60 mV dans une distribution 4 de potentiel zêta normalisée qui est déterminée par les étapes (i) à (iv) et l'étape (vii) de mesure de potentiel zêta suivantes n'est pas supérieure à 40 % ;

étape (i) : mesure d'une distribution 1 de potentiel zêta sans appliquer de champ électrique aux particules dans une cellule de mesure, suivie d'une normalisation de la distribution 1 de potentiel zêta pour obtenir une distribution 1 de potentiel zêta normalisée ;

étape (ii) : mesure d'une distribution 2 de potentiel zêta en appliquant un champ électrique de 1200 V/m aux particules dans la cellule de mesure, suivie d'une normalisation de la distribution 2 de potentiel zêta pour obtenir une distribution 2 de potentiel zêta normalisée ;

étape (iii) : calcul d'une différence entre les distributions 1 et 2 de potentiel zêta normalisées pour obtenir une distribution 3 de potentiel zêta normalisée ;

étape (iv) : préparation d'un histogramme de la distribution 3 de potentiel zêta normalisée à des intervalles de 1 mV et normalisation de l'histogramme pour obtenir la distribution 4 de potentiel zêta normalisée ;

étape (v) : lecture d'une région (surface) dans la plage de 0 à -55 mV dans la distribution 4 de potentiel zêta normalisée et une région (surface) interposée entre une courbe de la distribution 4 de potentiel zêta normalisée et une ligne indiquant une intensité de diffusion de zéro (0) pour déterminer la proportion de surface d'intensité de diffusion (%) des composants inclus dans la plage de 0 à -55 mV ;

étape (vi) : lecture d'une région (surface) dans la plage de 0 à -58 mV dans la distribution 4 de potentiel zêta normalisée et une région (surface) interposée entre une courbe de la distribution 4 de potentiel zêta normalisée et une ligne indiquant une intensité de diffusion de zéro (0) pour déterminer la proportion de surface d'intensité de diffusion (%) des composants inclus dans la plage de 0 à -58 mV ; et

étape (vii) : lecture d'une région (surface) dans la plage de 0 à -60 mV dans la distribution 4 de potentiel zêta normalisée et une région (surface) interposée entre une courbe de la distribution 4 de potentiel zêta normalisée et une ligne indiquant une intensité de diffusion de zéro (0) pour déterminer la proportion de surface d'intensité de diffusion (%) des composants inclus dans la plage de 0 à -60 mV.

2. Dispersion de pigment à base d'eau pour impression par jet d'encre selon la revendication 1, dans laquelle les distributions de potentiel zêta respectives sont mesurées par un procédé de diffusion de lumière dynamique.

3. Dispersion de pigment à base d'eau pour impression par jet d'encre selon la revendication 1 ou 2, dans laquelle une taille particulaire moyenne en volume des particules de pigment n'est pas inférieure à 40 nm et pas supérieure à 150 nm.

4. Dispersion de pigment à base d'eau pour impression par jet d'encre selon l'une quelconque des revendications 1 à 3, dans laquelle les particules de pigment sont des particules d'au moins un pigment sélectionné dans le groupe consistant en un pigment auto-dispersible et un pigment dispersé avec une polymère dispersible dans l'eau.

5. Dispersion de pigment à base d'eau pour impression par jet d'encre selon la revendication 4, dans laquelle une teneur du pigment dans la dispersion de pigment à base d'eau n'est pas inférieure à 5 % en masse et pas supérieure à 30 % en masse.

6. Dispersion de pigment à base d'eau pour impression par jet d'encre selon l'une quelconque des revendications 1 à 5, dans laquelle la dispersion de pigment à base d'eau est utilisée pour une encre comprenant un polyéthylène glycol.

7. Procédé de production de la dispersion de pigment à base d'eau pour impression par jet d'encre comprenant les étapes de production (1), (2) et (3) suivantes et une commande de la proportion de surface d'intensité de diffusion des composants inclus dans la plage de 0 à -55 mV dans une distribution 4 de potentiel zêta normalisée qui est déterminée par les étapes (i) à (iv) et l'étape (v) de mesure de potentiel zêta selon la revendication 1 à pas plus de 5 % ;

étape de production (1) : une soumission d'un mélange comprenant de l'eau, le pigment, le polymère dispersible dans l'eau et un solvant organique présentant une solubilité dans l'eau inférieure à 40 % en masse telle que mesurée à 20 °C à un traitement de dispersion jusqu'à ce que la taille particulaire moyenne en volume des particules de pigment diminue jusqu'à pas plus de 180 nm telle que mesurée par un procédé de diffusion de lumière dynamique pour obtenir une dispersion de pigment ;

étape de production (2) : un ajout d'eau à la dispersion de pigment obtenue dans l'étape de production (1), suivi par un maintien de la dispersion résultante dans une condition scellée sous pression réduite, à une température pas supérieure à 40 °C pendant une période de pas moins de 4 h et d'au plus 48 h ; et

étape de production (3) : une élimination du solvant organique à partir de la dispersion de pigment obtenue dans l'étape de production (2) en utilisant un appareil permettant d'éliminer le solvant organique pour obtenir la dispersion de pigment à base d'eau.

**8.** Procédé de production de la dispersion de pigment à base d'eau selon la revendication 7, dans lequel un rapport en masse entre le solvant organique et l'eau (solvant organique/eau) dans l'étape de production (1) n'est pas inférieur à 0,27, et un rapport en masse entre le solvant organique et l'eau (solvant organique/eau) dans l'étape de production (2) n'est pas supérieur à 0,29.

**9.** Procédé de production de la dispersion de pigment à base d'eau selon la revendication 7 ou 8, dans lequel le solvant organique est la méthyléthylcétone.

**10.** Procédé de production de la dispersion de pigment à base d'eau selon l'une quelconque des revendications 7 à 9, dans lequel le polymère dispersible dans l'eau est sous la forme d'un copolymère préparé par copolymérisation d'un monomère contenant un groupe ionique.

**11.** Procédé de production de la dispersion de pigment à base d'eau selon la revendication 10, dans lequel une teneur d'un motif constitutif dérivé du monomère contenant un groupe ionique dans le polymère dispersible dans l'eau n'est pas inférieure à 15 % en masse et pas supérieure à 25 % en masse.

**12.** Procédé de production de la dispersion de pigment à base d'eau selon l'une quelconque des revendications 7 à 11, dans lequel les particules de pigment sont sous la forme de particules de pigment sur lesquelles le polymère dispersible dans l'eau est adsorbé, ou de particules de polymère contenant un pigment.

**13.** Utilisation de la dispersion de pigment à base d'eau pour impression par jet d'encre selon l'une quelconque des revendications 1 à 7, pour une impression par jet d'encre.

## FIG.1

Zeta Potential Distribution 1

↓ Normalization

Normalized Zeta Potential Distribution 1

## FIG.2

Zeta Potential Distribution 2

Normalization

Normalized Zeta Potential Distribution 2

## FIG.3

Normalized Zeta Potential Distribution 2

Normalized Zeta Potential Distribution 1

Superimposition

Difference Calculation

Normalized Zeta Potential Distribution 3

## FIG.4

Normalized Zeta Potential Distribution 3

⬇ Conversion into Zeta Potential

Zeta Potential Distribution 3

⬇ Preparation of Histogram

Zeta Potential Distribution 4

## FIG.5

Scattering Intensity Area in the Range of 0 to −55 mV

Scattering Intensity Area in the Range of 0 to −58 mV

Scattering Intensity Area in the Range of 0 to −60 mV

**EP 3 072 935 B1**

**REFERENCES CITED IN THE DESCRIPTION**

**Patent documents cited in the description**

- JP 2006008786 A
- JP 2005015550 A
- JP 2007099915 A
- JP 2001026733 A
- JP 2008163131 A
- JP 2009155568 A